# EUROPEAN PATENT APPLICATION

(11) **EP 3 202 728 A1**
(43) Date of publication of application: **09.08.2017**
(21) Application number: 15845570.9
(22) Date of filing: 30.09.2015
(51) Int. Cl.: C03C 27/12, B60J 1/00

(54) **INTERMEDIATE FILM FOR LAMINATED GLASS, AND LAMINATED GLASS**

(30) Priority: 30.09.2014 JP 2014202613; 30.09.2014 JP 2014202614; 30.09.2014 JP 2014202616
(71) Applicant: Sekisui Chemical Co., Ltd., Osaka 530-8565 (JP)
(72) Inventor: MIKAYAMA, Kaoru, Mishima-gun Osaka 618-0021 (JP); NAGAI, Yasuharu, Mishima-gun Osaka 618-0021 (JP)
(74) Representative: Ter Meer Steinmeister & Partner
(86) International application number: PCT/JP2015/077863
(87) International publication number: WO 2016/052671

(57) **Abstract**

There is provided an interlayer film for laminated glass with which the rigidity of laminated glass can be enhanced, the sound insulating properties of laminated glass can be heightened and the recyclability of the interlayer film can be enhanced. The interlayer film for laminated glass according to the present invention includes a first layer and a second layer arranged on a first surface side of the first layer, the first layer contains a polyvinyl acetal resin and a second resin component, the second layer contains a polyvinyl acetal resin, the peak temperature of the loss tangent exhibited by the second resin component in the first layer is -30°C or higher and 10°C or lower, and the refractive index of the second resin component in the first layer is 1.47 or higher and 1.51 or lower.

## Description

### TECHNICAL FIELD

The present invention relates to an interlayer film for laminated glass which is used for obtaining laminated glass. Moreover, the present invention relates to laminated glass prepared with the interlayer film for laminated glass.

### BACKGROUND ART

Since laminated glass generates only a small amount of scattering glass fragments even when subjected to external impact and broken, laminated glass is excellent in safety. As such, the laminated glass is widely used for automobiles, railway vehicles, aircraft, ships, buildings and the like. The laminated glass is produced by sandwiching an interlayer film for laminated glass between two glass plates.

Examples of the interlayer film for laminated glass include a single-layered interlayer film having a one-layer structure and a multi-layered interlayer film having a two or more-layer structure.

As an example of the interlayer film for laminated glass, the following Patent Document 1 discloses a sound insulating layer including 100 parts by weight of a polyvinyl acetal resin with an acetalization degree of 60 to 85% by mole, 0.001 to 1.0 part by weight of at least one kind of metal salt among an alkali metal salt and an alkaline earth metal salt, and a plasticizer in an amount of greater than 30 parts by weight. This sound insulating layer can be used alone as a single-layered interlayer film.

Furthermore, the following Patent Document 1 also describes a multi-layered interlayer film in which the sound insulating layer and another layer are layered. Another layer to be layered with the sound insulating layer includes 100 parts by weight of a polyvinyl acetal resin with an acetalization degree of 60 to 85% by mole, 0.001 to 1.0 part by weight of at least one kind of metal salt among an alkali metal salt and an alkaline earth metal salt, and a plasticizer in an amount of 30 parts by weight or less.

The following Patent Document 2 discloses an interlayer film which is constituted of a polymer layer having a glass transition temperature of 33°C or higher. In Patent Document 2, a technique of arranging the polymer layer between glass plates with a thickness of 4.0 mm or less is described.

### Related Art Documents

### Patent Documents

Patent Document 1: JP 2007-070200 A
Patent Document 2: US 2013/0236711 A1

### SUMMARY OF THE INVENTION

### PROBLEMS TO BE SOLVED BY THE INVENTION

With regard to laminated glass prepared with such a conventional interlayer film described in Patent Document 1 or 2, there are cases where the laminated glass is low in rigidity. As such, for example, in the case of being used for a side door of an automobile, laminated glass with no fixing frame sometimes causes troubles in opening/closing of the glass due to the deflection attributed to the low rigidity of the laminated glass.

Moreover, in recent years, for the purpose of attaining reduced weight of laminated glass, a technique for making the thickness of a glass plate thin has been desired. In laminated glass prepared with an interlayer film sandwiched between two glass plates, when the thickness of the glass plate is thinned, there is a problem that maintaining the rigidity sufficiently high is extremely difficult.

Moreover, in recent years, for the purpose of heightening the sound insulating properties of laminated glass, a technique for adding an excess amount of a plasticizer to an interlayer film has also been studied. The sound insulating properties of laminated glass can be improved by adding an excess amount of a plasticizer to an interlayer film. However, in the case of using an excess amount of a plasticizer, the plasticizer may bleed out to the surface of the interlayer film.

Moreover, for the purpose of heightening the sound insulating properties of laminated glass, with regard to a multi-layered interlayer film in which plural layers are layered, a technique for making respective layers different from one another in content of the plasticizer used therefor has also been studied.

However, with regard to the multi-layered interlayer film, the plasticizer transfers from a layer having a large content of the plasticizer to a layer having a small content of the plasticizer, and the plasticizer may bleed out to the surface of the interlayer film or the interfaces between respective layers. As a result, the interlayer film is sometimes changed in elastic modulus, the adhesivity of the interlayer film is sometimes lowered, and the sound insulating properties of laminated glass are sometimes lowered.

Moreover, for the purpose of obtaining an interlayer film, it has been desired to reuse a recovered material which has been used at least one time for obtaining an interlayer film (a recovered interlayer film).

An object of the present invention is to provide an interlayer film for laminated glass with which the rigidity of laminated glass can be enhanced, the sound insulating properties of laminated glass can be heightened and the recyclability of the interlayer film can be enhanced. Moreover, the present invention is also aimed at providing laminated glass prepared with the interlayer film for laminated glass.

### MEANS FOR SOLVING THE PROBLEMS

According to a broad aspect of the present invention, there is provided an interlayer film for laminated glass including a first layer and a second layer arranged on a first surface side of the first layer, the first layer containing a polyvinyl acetal resin and a second resin component, the second layer containing a polyvinyl acetal resin, the peak temperature of the loss tangent exhibited by the second resin component in the first layer being - 30°C or higher and 10°C or lower, and the refractive index of the second resin component in the first layer being 1.47 or higher and 1.51 or lower.

In a specific aspect of the interlayer film for laminated glass according to the present invention, in 100% by weight of the total of the polyvinyl acetal resin in the first layer and the second resin component in the first layer, the content of the polyvinyl acetal resin in the first layer is 5% by weight or more and 60% by weight or less and the content of the second resin component in the first layer is 40% by weight or more and 95% by weight or less.

In a specific aspect of the interlayer film for laminated glass according to the present invention, the weight average molecular weight of the second resin component in the first layer is 10000 or more and 500000 or less.

In a specific aspect of the interlayer film for laminated glass according to the present invention, the absolute value of the difference in refractive index between the polyvinyl acetal resin in the first layer and the second resin component in the first layer is 0.003 or less.

In a specific aspect of the interlayer film for laminated glass according to the present invention, the second resin component in the first layer is a resin different from the polyvinyl acetal resin.

In a specific aspect of the interlayer film for laminated glass according to the present invention, the second resin component in the first layer is an acrylic polymer, a polyurethane polymer, a silicone polymer, a kind of rubber or a vinyl acetate polymer.

In a specific aspect of the interlayer film for laminated glass according to the present invention, the second resin component in the first layer is an acrylic polymer.

In a specific aspect of the interlayer film for laminated glass according to the present invention, the interlayer film for laminated glass further includes a third layer arranged on a second surface side opposite to the first surface of the first layer, and the third layer contains a polyvinyl acetal resin.

In a specific aspect of the interlayer film for laminated glass according to the present invention, the second layer contains a plasticizer and the third layer contains a plasticizer.

According to a broad aspect of the present invention, there is provided laminated glass including a first laminated glass member, a second laminated glass member and the interlayer film for laminated glass described above, the interlayer film for laminated glass being arranged between the first laminated glass member and the second laminated glass member.

### EFFECT OF THE INVENTION

Since the interlayer film for laminated glass according to the present invention includes a first layer and a second layer arranged on a first surface side of the first layer, the first layer contains a polyvinyl acetal resin and a second resin component, the second layer contains a polyvinyl acetal resin, the peak temperature of the loss tangent exhibited by the second resin component in the first layer is -30°C or higher and 10°C or lower, and the refractive index of the second resin component in the first layer is 1.47 or higher and 1.51 or lower, the rigidity of laminated glass prepared with the interlayer film can be enhanced, the sound insulating properties of the laminated glass can be heightened and the recyclability can be enhanced.

### BRIEF DESCRIPTION OF DRAWINGS

[Fig. 1] Fig. 1 is a sectional view schematically showing an interlayer film for laminated glass in accordance with a first embodiment of the present invention.
[Fig. 2] Fig. 2 is a sectional view schematically showing an example of laminated glass prepared with the interlayer film for laminated glass shown in Fig. 1.
[Fig. 3] Fig. 3 is a schematic view for illustrating a measurement method for flexural rigidity.

### MODE(S) FOR CARRYING OUT THE INVENTION

Hereinafter, the present invention will be described in detail.

### (Interlayer film for laminated glass)

An interlayer film for laminated glass (in the present specification, sometimes abbreviated as an "interlayer film") according to the present invention has a two or more-layer structure.

The interlayer film according to the present invention is provided with a first layer and a second layer arranged on a surface side of the first layer. The first layer contains a polyvinyl acetal resin and a second resin component. The second layer contains a polyvinyl acetal resin. The peak temperature of the loss tangent exhibited by the second resin component in the first layer is -30°C or higher and 10°C or lower. The refractive index of the second resin component in the first layer is 1.47 or higher and 1.51 or lower.

Since the interlayer film according to the present invention is provided with the above-mentioned configuration, the rigidity of laminated glass prepared with the interlayer film can be enhanced and the penetration resistance of the laminated glass can be enhanced. Moreover, for obtaining laminated glass, the interlayer film is arranged between a first laminated glass member and a second laminated glass member. Even when the thickness of the first laminated glass member is thin, by the use of the interlayer film according to the present invention, the rigidity of laminated glass can be sufficiently enhanced. Moreover, even when the thicknesses of both the first laminated glass member and the second laminated glass member are thin, by the use of the interlayer film according to the present invention, the rigidity of laminated glass can be sufficiently enhanced. Moreover, when the thicknesses of both the first laminated glass member and the second laminated glass member are thick, by the use of the interlayer film according to the present invention, the rigidity of laminated glass can be considerably enhanced.

For example, laminated glass can be reduced in weight as long as the rigidity of laminated glass, even with the thin glass plates, can be enhanced by virtue of the interlayer film. When laminated glass is light in weight, the amount of the material used for the laminated glass can be decreased and the environmental load can be reduced. Furthermore, when laminated glass being light in weight is used for an automobile, the fuel consumption can be improved, and as a result, the environmental load can be reduced. In the present invention, since the rigidity of the interlayer film is high, it is possible to cope with reduction in weight of laminated glass.

Moreover, when the thicknesses of both the first laminated glass member and the second laminated glass member are thick, by the use of the interlayer film according to the present invention, the rigidity of laminated glass can be considerably enhanced.

Furthermore, in the present invention, the sound insulating properties can be heightened, and the peak frequency of the loss factor can be easily controlled within a suitable range. For example, the peak frequency of the loss factor can be controlled within a range of 3000 to 8000 Hz and can also be controlled within a range of 4000 Hz or higher.

Incidentally, for the purpose of obtaining an interlayer film, a recovered material which has been used at least one time for obtaining an interlayer film (a recovered interlayer film) is sometimes reused. Examples of the recovered material which has been used at least one time for obtaining an interlayer film (the recovered interlayer film) include unwanted portions (selvages) at both ends of an interlayer film which are generated in a production process of the interlayer film, unwanted portions (trimmings) at the periphery of an interlayer film which are generated in a production process of laminated glass, an interlayer film for laminated glass obtained by separating and removing glass plates from a defective product of laminated glass generated in a production process of laminated glass, and an interlayer film obtained by separating and removing glass plates from laminated glass obtained by disassembling a used vehicle and a decrepit building. In this connection, an interlayer film which is generated in a production process of an interlayer film and becomes unnecessary also corresponds to a recovered material which has been used at least one time for obtaining an interlayer film. When the haze of an interlayer film material after rekneaded is low, the interlayer film material can be reused. In the present invention, the haze after rekneaded can be made low and the recyclability can be enhanced.

The interlayer film may have a two-layer structure, may have a three or more-layer structure, and may be provided with a third layer in addition to the first layer and the second layer. It is preferred that the interlayer film be provided with the third layer arranged on a second surface side opposite to the first surface of the first layer.

Hereinafter, specific embodiments of the present invention will be described with reference to the drawings.

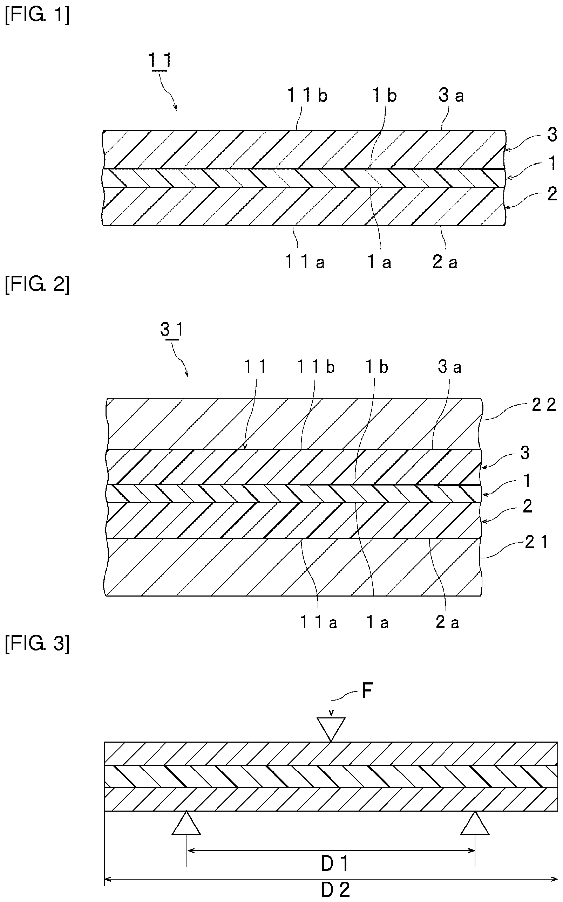

Fig. 1 is a sectional view schematically showing an interlayer film for laminated glass in accordance with a first embodiment of the present invention.

An interlayer film 11 shown in Fig. 1 is a multi-layered interlayer film having a two or more-layer structure. The interlayer film 11 is used for obtaining laminated glass. The interlayer film 11 is an interlayer film for laminated glass. The interlayer film 11 is provided with a first layer 1, a second layer 2 and a third layer 3. The second layer 2 is arranged on a first surface 1a of the first layer 1 to be layered thereon. The third layer 3 is arranged on a second surface 1b opposite to the first surface 1a of the first layer 1 to be layered thereon. The first layer 1 is an intermediate layer. Each of the second layer 2 and the third layer 3 is a protective layer and is a surface layer in the present embodiment. The first layer 1 is arranged between the second layer 2 and the third layer 3 to be sandwiched therebetween. Accordingly, the interlayer film 11 has a multilayer structure (a second layer 2/a first layer 1/a third layer 3) in which the second layer 2, the first layer 1 and the third layer 3 are layered in this order.

In this connection, other layers may be arranged between the second layer 2 and the first layer 1 and between the first layer 1 and the third layer 3, respectively. It is preferred that each of the second layer 2 and the third layer 3 be directly layered on the first layer 1. Examples of another layer include a layer containing polyethylene terephthalate.

The first layer 1 contains a polyvinyl acetal resin and a second resin component. The second layer 2 contains a polyvinyl acetal resin. It is preferred that the third layer 3 contain a polyvinyl acetal resin.

Hereinafter, the details of each ingredient which can be used for respective layers (the first layer, the second layer and the third layer) constituting the interlayer film according to the present invention will be described.

### (Polyvinyl acetal resin)

The first layer contains a polyvinyl acetal resin (hereinafter, sometimes described as a polyvinyl acetal resin (1)). The second layer contains a polyvinyl acetal resin (hereinafter, sometimes described as a polyvinyl acetal resin (2)). It is preferred that the third layer contain a polyvinyl acetal resin (hereinafter, sometimes described as a polyvinyl acetal resin (3)). The polyvinyl acetal resin (1), the polyvinyl acetal resin (2) and the polyvinyl acetal resin (3) may be the same as or different from one another. One kind of each of the polyvinyl acetal resin (1), the polyvinyl acetal resin (2) and the polyvinyl acetal resin (3) may be used alone, and two or more kinds thereof may be used in combination. In this connection, in the present specification, examples of the polyvinyl acetal resin include an acetoacetalized resin.

For example, the polyvinyl acetal resin can be produced by acetalizing polyvinyl alcohol with an aldehyde. It is preferred that the polyvinyl acetal resin be an acetalized product of polyvinyl alcohol. For example, the polyvinyl alcohol can be obtained by saponifying polyvinyl acetate. The saponification degree of the polyvinyl alcohol generally falls within the range of 70 to 99.9% by mole.

The average polymerization degree of the polyvinyl alcohol is preferably 200 or more, more preferably 500 or more, even more preferably 1500 or more, further preferably 1600 or more, especially preferably 2600 or more, most preferably 2700 or more, preferably 5000 or less, more preferably 4000 or less and further preferably 3500 or less. When the average polymerization degree is the above lower limit or more, the penetration resistance of laminated glass is further enhanced. When the average polymerization degree is the above upper limit or less, formation of an interlayer film is facilitated.

The average polymerization degree of the polyvinyl alcohol is determined by a method in accordance with JIS K6726 "Testing methods for polyvinyl alcohol".

It is preferred that the number of carbon atoms of the acetal group in the polyvinyl acetal resin fall within the range of 2 to 5, and it is preferred that the number of carbon atoms be 2, 3 or 4. When the number of carbon atoms of the acetal group in the polyvinyl acetal resin is 3 or more, the glass transition temperature of the interlayer film is sufficiently lowered. Moreover, it is preferred that the number of carbon atoms of the acetal group in the polyvinyl acetal resin be 2 or 4, and in this case, the polyvinyl acetal resin is efficiently produced.

In general, as the aldehyde, an aldehyde with 1 to 10 carbon atoms is suitably used. Examples of the aldehyde with 1 to 10 carbon atoms include formaldehyde, acetaldehyde, propionaldehyde, n-butyraldehyde, isobutyraldehyde, n-valeraldehyde, 2-ethylbutyraldehyde, n-hexylaldehyde, n-octylaldehyde, n-nonylaldehyde, n-decylaldehyde, and benzaldehyde. Of these, acetaldehyde, propionaldehyde, n-butyraldehyde, isobutyraldehyde, n-hexylaldehyde or n-valeraldehyde is preferred, acetaldehyde, propionaldehyde, n-butyraldehyde or isobutyraldehyde is more preferred, and acetaldehyde, propionaldehyde or n-butyraldehyde is further preferred. One kind of the aldehyde may be used alone, and two or more kinds thereof may be used in combination.

The content of the hydroxyl group (the amount of hydroxyl groups) of the polyvinyl acetal resin (1) is preferably 17% by mole or more, more preferably 20% by mole or more, further preferably 22% by mole or more, preferably 40% by mole or less, more preferably less than 35% by mole, further preferably 30% by mole or less and especially preferably 25% by mole or less. When the content of the hydroxyl group is the above lower limit or more, the adhesive force of the interlayer film is further heightened. In particular, when the content of the hydroxyl group of the polyvinyl acetal resin (1) is 20% by mole or more, the resin is high in reaction efficiency and is excellent in productivity, and moreover, when less than 35% by mole, the sound insulating properties of laminated glass are further heightened. Moreover, when the content of the hydroxyl group is the above upper limit or less, the flexibility of the interlayer film is enhanced and the handling of the interlayer film is facilitated.

The content of the hydroxyl group of each of the polyvinyl acetal resin (2) and the polyvinyl acetal resin (3) is preferably 25% by mole or more, preferably 38% by mole or less, more preferably 35% by mole or less, further preferably 32% by mole or less, especially preferably 30% by mole or less and most preferably 27.5% or less by mole. When the content of the hydroxyl group is the above lower limit or more, the adhesive force of the interlayer film is further heightened. Moreover, when the content of the hydroxyl group is the above upper limit or less, the flexibility of the interlayer film is enhanced and the handling of the interlayer film is facilitated. Moreover, when the content of the hydroxyl group is the above upper limit or less, the rigidity is effectively enhanced.

The content of the hydroxyl group of the polyvinyl acetal resin is a mole fraction, represented in percentage, obtained by dividing the amount of ethylene groups to which the hydroxyl group is bonded by the total amount of ethylene groups in the main chain. For example, the amount of ethylene groups to which the hydroxyl group is bonded can be measured in accordance with JIS K6728 "Testing methods for polyvinyl butyral".

The acetylation degree (the amount of acetyl groups) of the polyvinyl acetal resin (1) is preferably 0.01% by mole or more, more preferably 0.1% by mole or more, even more preferably 7% by mole or more, further preferably 9% by mole or more, preferably 30% by mole or less, more preferably 25% by mole or less and further preferably 15% by mole or less. When the acetylation degree is the above lower limit or more, the sound insulating properties are heightened and the compatibility between the polyvinyl acetal resin and a plasticizer is heightened. When the acetylation degree is the above upper limit or less, with regard to the interlayer film and laminated glass, the moisture resistance thereof is enhanced. In particular, when the acetylation degree of the polyvinyl acetal resin (1) is 0.1% by mole ore more and 25% by mole or less, the resulting laminated glass is excellent in penetration resistance.

The acetylation degree of each of the polyvinyl acetal resin (2) and the polyvinyl acetal resin (3) is preferably 0.01% by mole or more, more preferably 0.5% by mole or more, preferably 10% by mole or less and more preferably 2% by mole or less. When the acetylation degree is the above lower limit or more, the compatibility between the polyvinyl acetal resin and a plasticizer is heightened. When the acetylation degree is the above upper limit or less, with regard to the interlayer film and laminated glass, the moisture resistance thereof is enhanced.

The acetylation degree is a mole fraction, represented in percentage, obtained by dividing the amount of ethylene groups to which the acetyl group is bonded by the total amount of ethylene groups in the main chain. For example, the amount of ethylene groups to which the acetyl group is bonded can be measured in accordance with JIS K6728 "Testing methods for polyvinyl butyral".

The acetalization degree of the polyvinyl acetal resin (1) (the butyralization degree in the case of a polyvinyl butyral resin) is preferably 47% by mole or more, more preferably 60% by mole or more, preferably 80% by mole or less and more preferably 70% by mole or less. When the acetalization degree is the above lower limit or more, the interaction with a second resin component is heightened, the toughness is enhanced and the compatibility between the polyvinyl acetal resin and a plasticizer is heightened. When the acetalization degree is the above upper limit or less, the reaction time required for producing the polyvinyl acetal resin is shortened.

The acetalization degree of each of the polyvinyl acetal resin (2) and the polyvinyl acetal resin (3) (the butyralization degree in the case of a polyvinyl butyral resin) is preferably 55% by mole or more, more preferably 67% by mole or more, preferably 75% by mole or less and more preferably 71% by mole or less. When the acetalization degree is the above lower limit or more, the compatibility between the polyvinyl acetal resin and a plasticizer is heightened. When the acetalization degree is the above upper limit or less, the reaction time required for producing the polyvinyl acetal resin is shortened.

The acetalization degree is a mole fraction, represented in percentage, obtained by dividing a value obtained by subtracting the amount of ethylene groups to which the hydroxyl group is bonded and the amount of ethylene groups to which the acetyl group is bonded from the total amount of ethylene groups in the main chain by the total amount of ethylene groups in the main chain.

In this connection, it is preferred that the content of the hydroxyl group (the amount of hydroxyl groups), the acetalization degree (the butyralization degree) and the acetylation degree be calculated from the results measured by a method in accordance with JIS K6728 "Testing methods for polyvinyl butyral". In this context, a method in accordance with ASTM D1396-92 may be used. When the polyvinyl acetal resin is a polyvinyl butyral resin, the content of the hydroxyl group (the amount of hydroxyl groups), the acetalization degree (the butyralization degree) and the acetylation degree can be calculated from the results measured by a method in accordance with JIS K6728 "Testing methods for polyvinyl butyral".

From the viewpoint of further improving the penetration resistance of laminated glass, it is preferred that the polyvinyl acetal resin (1) be a polyvinyl acetal resin (A) with an acetylation degree (a) of 8% by mole or less and an acetalization degree (a) of 65% by mole or more or a polyvinyl acetal resin (B) with an acetylation degree (b) greater than 8% by mole. Each of the polyvinyl acetal resin (2) and the polyvinyl acetal resin (3) may be the polyvinyl acetal resin (A) and may be the polyvinyl acetal resin (B).

The acetylation degree (a) of the polyvinyl acetal resin (A) is 8% by mole or less, preferably 7.5% by mole or less, more preferably 7% by mole or less, further preferably 6.5% by mole or less, especially preferably 5% by mole or less, preferably 0.1% by mole or more, more preferably 0.5% by mole or more, further preferably 0.8% by mole or more and especially preferably 1% by mole or more. When the acetylation degree (a) is the above upper limit or less and the above lower limit or more, the transfer of a plasticizer can be easily controlled and the sound insulating properties of laminated glass are further heightened.

The acetalization degree (a) of the polyvinyl acetal resin (A) is 65% by mole or more, preferably 67% by mole or more, more preferably 70% by mole or more, even more preferably 70.5% by mole or more, further preferably 71% by mole or more, still further preferably g 71.5% by mole or more, especially preferably 72% by mole or more, preferably 85% by mole or less, more preferably 83% by mole or less, further preferably 81% by mole or less and especially preferably 79% by mole or less. When the acetalization degree (a) is the above lower limit or more, the sound insulating properties of laminated glass are further heightened. When the acetalization degree (a) is the above upper limit or less, the reaction time required for producing the polyvinyl acetal resin (A) can be shortened.

The content (a) of the hydroxyl group of the polyvinyl acetal resin (A) is preferably 18% by mole or more, more preferably 19% by mole or more, further preferably 20% by mole or more, especially preferably 21% by mole or more, preferably 40% by mole or less, more preferably 37% by mole or less, even more preferably 34% by mole or less, further preferably 31% by mole or less, still further preferably 30% by mole or less, especially preferably 29% by mole or less and most preferably 28% by mole or less. When the content (a) of the hydroxyl group is the above lower limit or more, the adhesive force of the first layer is further heightened. When the content (a) of the hydroxyl group is the above upper limit or less, the sound insulating properties of laminated glass are further heightened.

The acetylation degree (b) of the polyvinyl acetal resin (B) is greater than 8% by mole, preferably 9% by mole or more, more preferably 9.5% by mole or more, further preferably 10% by mole or more, especially preferably 10.5% by mole or more, preferably 30% by mole or less, more preferably 28% by mole or less, further preferably 26% by mole or less and especially preferably 24% by mole or less. When the acetylation degree (b) is the above lower limit or more, the sound insulating properties of laminated glass are further heightened. When the acetylation degree (b) is the above upper limit or less, the reaction time required for producing the polyvinyl acetal resin (B) can be shortened.

The acetalization degree (b) of the polyvinyl acetal resin (B) is preferably 50% by mole or more, more preferably 53% by mole or more, further preferably 55% by mole or more, especially preferably 60% by mole or more, preferably 80% by mole or less, more preferably 78% by mole or less, further preferably 76% by mole or less and especially preferably 74% by mole or less. When the acetalization degree (b) is the above lower limit or more, the sound insulating properties of laminated glass are further heightened. When the acetalization degree (b) is the above upper limit or less, the reaction time required for producing the polyvinyl acetal resin (B) can be shortened.

The content (b) of the hydroxyl group of the polyvinyl acetal resin (B) is preferably 18% by mole or more, more preferably 19% by mole or more, further preferably 20% by mole or more, especially preferably 21% by mole or more, preferably 38% by mole or less, more preferably 35% by mole or less, even more preferably 31% by mole or less, further preferably 30% by mole or less, still further preferably 29% by mole or less and especially preferably 28% by mole or less. When the content (b) of the hydroxyl group is the above lower limit or more, the adhesive force of the second layer is further heightened. When the content (b) of the hydroxyl group is the above upper limit or less, the sound insulating properties of laminated glass are further heightened.

It is preferred that each of the polyvinyl acetal resin (A) and the polyvinyl acetal resin (B) be a polyvinyl butyral resin, a polyvinyl acetoacetal resin or a polyvinyl butyral-polyvinyl acetoacetal resin (a coacetalized resin), and it is more preferred that each of the polyvinyl acetal resin (A) and the polyvinyl acetal resin (B) be a polyvinyl butyral resin.

### (Second resin component)

The first layer contains a second resin component in addition to the polyvinyl acetal resin. Since the resulting interlayer film is further excellent in effects of the present invention, it is preferred that the second resin component not be compatible with the polyvinyl acetal resin in the first layer. The second layer may contain the second resin component. The third layer may contain the second resin component. One kind of the second resin component may be used alone, and two or more kinds thereof may be used in combination.

It is preferred that the second resin component in the first layer be a resin different from the polyvinyl acetal resin since the difference between the glass transition temperatures of the polyvinyl acetal resin and the second resin component is easily made large.

From the viewpoints of further enhancing the rigidity, furthermore, further enhancing the rigidity over a wide temperature range, and especially, further heightening the sound insulating properties, it is preferred that the second resin component be an acrylic polymer, an urethane polymer, a silicone polymer, a kind of rubber or a vinyl acetate polymer, it is more preferred that the second resin component be an acrylic polymer or a vinyl acetate polymer, and it is further preferred that the second resin component be an acrylic polymer. Examples of the polymer include a copolymer.

From the viewpoints of further enhancing the rigidity, furthermore, further enhancing the rigidity over a wide temperature range, and especially, further heightening the sound insulating properties, it is preferred that the acrylic polymer be a polymer of a polymerization component containing a (meth)acrylic acid ester. By selecting the kind of a (meth)acrylic acid ester and the blending amount thereof, the glass transition temperature derived from the second resin component can be easily controlled.

The peak temperature of the loss tangent of the second resin component in the first layer is -30°C or higher and 10°C or lower. The peak temperature of the loss tangent of the second resin component in the first layer is -15°C or higher, more preferably -10°C or higher, further preferably -7°C or higher and preferably 3°C or lower since the resulting interlayer film is further excellent in effects of the present invention.

From the viewpoint of enhancing the rigidity and the sound insulating properties with good balance, the absolute value of the difference in refractive index between the polyvinyl acetal resin in the first layer and the second resin component in the first layer is preferably 0.004 or less, more preferably 0.003 or less and further preferably 0.0025 or less.

The refractive index of the second resin component in the first layer is 1.47 or higher and 1.51 or lower. From the viewpoint of enhancing the rigidity and the sound insulating properties with good balance, the refractive index of the second resin component in the first layer is 1.475 or higher and preferably 1.5 or lower.

From the viewpoints of further enhancing the rigidity, furthermore, further enhancing the rigidity over a wide temperature range, and especially, further heightening the sound insulating properties, the weight average molecular weight of the second resin component is preferably 8000 or more, more preferably 10000 or more, further preferably 30000 or more, preferably 1000000 or less, more preferably 800000 or less and further preferably 500000 or less. The weight average molecular weight refers to a molecular weight, calculated in terms of polystyrene, determined by the gel permeation chromatography measurement.

In the first layer, the polyvinyl acetal resin may be dotted with portions of the second resin component, and the second resin component may be dotted with portions of the polyvinyl acetal resin. In the first layer, the polyvinyl acetal resin and the second resin component may form a sea-island structure. The polyvinyl acetal resin may constitute the sea part and the second resin component may constitute the island part, and the second resin component may constitute the sea part and the polyvinyl acetal resin may constitute the island part. In the first layer, the polyvinyl acetal resin may constitute a continuous portion (may have a continuous structure), the second resin component may constitute a continuous portion (may have a continuous structure), and the polyvinyl acetal resin and the second resin component may form a co-continuous structure. In the first layer, the polyvinyl acetal resin may exist in a mesh-like manner, and the second resin component may exist in a mesh-like manner. It is preferred that the polyvinyl acetal resin and the second resin component have a sea-island structure or a co-continuous structure, because the resulting interlayer film is excellent in effects of the present invention, it is more preferred that the polyvinyl acetal resin and the second resin component form a sea-island structure, and it is preferred that the first layer have a sea-island structure constituted of the polyvinyl acetal resin and the second resin component. In particular, from the viewpoint of making the interlayer film develop the toughness, a sea-island structure in which the polyvinyl acetal resin constitutes the sea part is preferred.

In the sea-island structure, the average diameter of island parts is preferably 15 nm or more, more preferably 20 nm or more, further preferably 30 nm or more, preferably 13 µm or less, more preferably 10 µm or less, and further preferably 2 µm or less. The diameter of an island part refers to the largest diameter, and the average diameter of island parts is determined by averaging diameters (respective largest diameters) of plural island parts.

From the viewpoint of enhancing the rigidity and the sound insulating properties with good balance, in 100% by weight of the total of the polyvinyl acetal resin in the first layer and the second resin component in the first layer, the content of the polyvinyl acetal resin in the first layer is preferably 5% by weight or more (preferably 10% by weight or more, more preferably 15% by weight or more) and 60% by weight or less (preferably 55% by weight or less, more preferably 50% by weight or less), and the content of the skeleton derived from the second resin component in the copolymer in the first layer is 40% by weight or more (preferably 45% by weight or more, more preferably 50% by weight or more) and 95% by weight or less (preferably 90% by weight or less, more preferably 85% by weight or less).

### (Plasticizer)

The first layer does not contain or contains a plasticizer (hereinafter, sometimes described as a plasticizer (1)). It is preferred that the first layer contain a plasticizer (1). It is preferred that the second layer contain a plasticizer (hereinafter, sometimes described as a plasticizer (2)). It is preferred that the third layer contain a plasticizer (hereinafter, sometimes described as a plasticizer (3)). By using a polyvinyl acetal resin and a plasticizer together, the adhesive force of a layer containing the polyvinyl acetal resin and the plasticizer to a laminated glass member or another layer is moderately heightened. The plasticizer is not particularly limited. The plasticizer (1), the plasticizer (2) and the plasticizer (3) may be the same as or different from one another. One kind of the plasticizer may be used alone, and two or more kinds thereof may be used in combination.

Examples of the plasticizer include organic ester plasticizers such as a monobasic organic acid ester and a polybasic organic acid ester, organic phosphate plasticizers such as an organic phosphate plasticizer and an organic phosphite plasticizer. Of these, organic ester plasticizers are preferred. It is preferred that the plasticizer be a liquid plasticizer.

Examples of the monobasic organic acid ester include a glycol ester obtained by the reaction of a glycol with a monobasic organic acid. Examples of the glycol include triethylene glycol, tetraethylene glycol, and tripropylene glycol. Examples of the monobasic organic acid include butyric acid, isobutyric acid, caproic acid, 2-ethylbutyric acid, heptanoic acid, n-octylic acid, 2-ethylhexanoic acid, n-nonylic acid, and decanoic acid.

Examples of the polybasic organic acid ester include an ester compound of a polybasic organic acid and an alcohol having a linear or branched structure of 4 to 8 carbon atoms. Examples of the polybasic organic acid include adipic acid, sebacic acid, and azelaic acid.

Examples of the organic ester plasticizer include triethylene glycol di-2-ethylpropanoate, triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, dihexyl adipate, dioctyl adipate, hexyl cyclohexyl adipate, a mixture of heptyl adipate and nonyl adipate, diisononyl adipate, diisodecyl adipate, heptyl nonyl adipate, dibutyl sebacate, oil-modified sebacic alkyds, and a mixture of a phosphoric acid ester and an adipic acid ester. Organic ester plasticizers other than these may be used. Other adipic acid esters other than the above-described adipic acid esters may be used.

Examples of the organic phosphate plasticizer include tributoxyethyl phosphate, isodecyl phenyl phosphate, and triisopropyl phosphate.

It is preferred that the plasticizer be a diester plasticizer represented by the following formula (1).

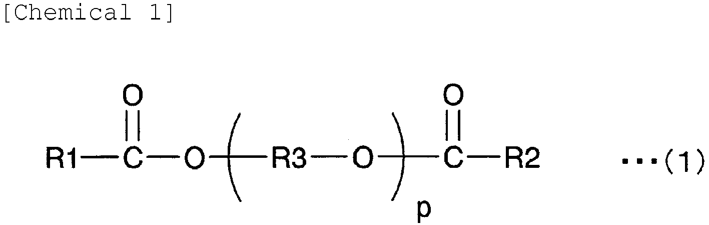

In the foregoing formula (1), R1 and R2 each represent an organic group with 2 to 10 carbon atoms, R3 represents an ethylene group, an isopropylene group or an n-propylene group, and p represents an integer of 3 to 10. It is preferred that R1 and R2 in the foregoing formula (1) each be an organic group with 5 to 10 carbon atoms, and it is more preferred that R1 and R2 each be an organic group with 6 to 10 carbon atoms.

It is preferred that the plasticizer include triethylene glycol di-2-ethylhexanoate (3GO), triethylene glycol di-2-ethylbutyrate (3GH) or triethylene glycol di-2-ethylpropanoate, it is more preferred that the plasticizer include triethylene glycol di-2-ethylhexanoate or triethylene glycol di-2-ethylbutyrate, and it is further preferred that the plasticizer include triethylene glycol di-2-ethylhexanoate.

Each of the content of the plasticizer (2) (hereinafter, sometimes described as the content (2)) relative to 100 parts by weight of the polyvinyl acetal resin (2) and the content of the plasticizer (3) (hereinafter, sometimes described as the content (3)) relative to 100 parts by weight of the polyvinyl acetal resin (3) is preferably 1 part by weight or more, more preferably 3 parts by weight or more, further preferably 20 parts by weight or more, especially preferably 25 parts by weight or more, preferably 40 parts by weight or less, more preferably 35 parts by weight or less, further preferably 32 parts by weight or less and especially preferably 30 parts by weight or less. When the content (2) and the content (3) are the above lower limit or more, the flexibility of the interlayer film is enhanced and the handling of the interlayer film is facilitated. In particular, when the content (2) and the content (3) are 20 parts by weight or more, the rigidity is effectively enhanced. When the content (2) and the content (3) are the above upper limit or less, the mechanical strength of the interlayer film is further heightened and the penetration resistance of laminated glass is further enhanced. In particular, when the content (2) and the content (3) are 35 parts by weight or less, the penetration resistance of laminated glass is effectively enhanced.

The content of the plasticizer (1) (hereinafter, sometimes described as the content (1)) relative to 100 parts by weight of the total of the polyvinyl acetal resin (1) and the second resin component is preferably 0 part by weight (not used) or more, more preferably 1 part by weight or more, further preferably 3 parts by weight or more, preferably 80 parts by weight or less, more preferably 70 parts by weight or less, further preferably 50 parts by weight or less and especially preferably 30 parts by weight or less. Since the first layer contains the second resin component, the plasticizer does not need to be used therein, and even when the plasticizer is used, the content of the plasticizer can be reduced. Since the plasticizer is relatively expensive, by reducing the amount of the plasticizer used, the cost of the interlayer film can be reduced.

For the purpose of reducing the cost of the interlayer film, it is preferred that the content (2) be greater than the content (1) and it is preferred that the content (3) be greater than the content (1). In this case, from the viewpoint of reducing the cost of the interlayer film, each of the absolute value of the difference between the content (2) and the content (1) and the absolute value of the difference between the content (3) and the content (1) is preferably 2 parts by weight or more, more preferably 5 parts by weight or more and further preferably 8 parts by weight or more. Each of the absolute value of the difference between the content (2) and the content (1) and the absolute value of the difference between the content (3) and the content (1) is preferably 40 parts by weight or less, more preferably 35 parts by weight or less, even more preferably 32 parts by weight or less, further preferably 30 parts by weight or less, still further preferably 22 parts by weight or less, especially preferably 20 parts by weight or less and most preferably 15 parts by weight or less.

### (Heat shielding compound)

It is preferred that the interlayer film include a heat shielding compound. It is preferred that the first layer contain a heat shielding compound. It is preferred that the second layer contain a heat shielding compound. It is preferred that the third layer contain a heat shielding compound. One kind of the heat shielding compound may be used alone, and two or more kinds thereof may be used in combination.

### Ingredient X:

It is preferred that the interlayer film include at least one kind of Ingredient X among a phthalocyanine compound, a naphthalocyanine compound and an anthracyanine compound. It is preferred that the first layer contain the Ingredient X. It is preferred that the second layer contain the Ingredient X. It is preferred that the third layer contain the Ingredient X. The Ingredient X is a heat shielding compound. One kind of the Ingredient X may be used alone, and two or more kinds thereof may be used in combination.

The Ingredient X is not particularly limited. As the Ingredient X, conventionally known phthalocyanine compound, naphthalocyanine compound and anthracyanine compound can be used.

Examples of the Ingredient X include phthalocyanine, a derivative of phthalocyanine, naphthalocyanine, a derivative of naphthalocyanine, anthracyanine, and a derivative of anthracyanine. It is preferred that each of the phthalocyanine compound and the derivative of phthalocyanine have a phthalocyanine skeleton. It is preferred that each of the naphthalocyanine compound and the derivative of naphthalocyanine have a naphthalocyanine skeleton. It is preferred that each of the anthracyanine compound and the derivative of anthracyanine have an anthracyanine skeleton.

With regard to the interlayer film and laminated glass, from the viewpoint of further enhancing the heat shielding properties thereof, it is preferred that the Ingredient X be at least one kind selected from the group consisting of phthalocyanine, a derivative of phthalocyanine, naphthalocyanine and a derivative of naphthalocyanine, and it is more preferred that the Ingredient X be at least one kind among phthalocyanine and a derivative of phthalocyanine.

From the viewpoints of effectively enhancing the heat shielding properties and maintaining the visible light transmittance at a higher level over a long period of time, it is preferred that the Ingredient X contain vanadium atoms or copper atoms. It is preferred that the Ingredient X contain vanadium atoms and it is also preferred that the Ingredient X contain copper atoms. It is more preferred that the Ingredient X be at least one kind among phthalocyanine containing vanadium atoms or copper atoms and a derivative of phthalocyanine containing vanadium atoms or copper atoms. With regard to the interlayer film and laminated glass, from the viewpoint of still further enhancing the heat shielding properties thereof, it is preferred that the Ingredient X have a structural unit in which an oxygen atom is bonded to a vanadium atom.

In 100% by weight of a layer containing the Ingredient X (a first layer, a second layer or a third layer), the content of the Ingredient X is preferably 0.001% by weight or more, more preferably 0.005% by weight or more, further preferably 0.01% by weight or more, especially preferably 0.02% by weight or more, preferably 0.2% by weight or less, more preferably 0.1% by weight or less, further preferably 0.05% by weight or less and especially preferably 0.04% by weight or less. When the content of the Ingredient X is the above lower limit or more and the above upper limit or less, the heat shielding properties are sufficiently enhanced and the visible light transmittance is sufficiently heightened. For example, it is possible to make the visible light transmittance 70% or more.

### Heat shielding particles:

It is preferred that the interlayer film include heat shielding particles. It is preferred that the first layer contain the heat shielding particles. It is preferred that the second layer contain the heat shielding particles. It is preferred that the third layer contain the heat shielding particles. The heat shielding particle is a heat shielding compound. By the use of heat shielding particles, infrared rays (heat rays) can be effectively cut off. One kind of the heat shielding particles may be used alone, and two or more kinds thereof may be used in combination.

From the viewpoint of further heightening the heat shielding properties of laminated glass, it is more preferred that the heat shielding particles be metal oxide particles. It is preferred that the heat shielding particle be a particle (a metal oxide particle) formed from an oxide of a metal.

The energy amount of an infrared ray with a wavelength of 780 nm or longer which is longer than that of visible light is small as compared with an ultraviolet ray. However, the thermal action of infrared rays is large, and when infrared rays are absorbed into a substance, heat is released from the substance. As such, infrared rays are generally called heat rays. By the use of the heat shielding particles, infrared rays (heat rays) can be effectively cut off. In this connection, the heat shielding particle means a particle capable of absorbing infrared rays.

Specific examples of the heat shielding particles include metal oxide particles such as aluminum-doped tin oxide particles, indium-doped tin oxide particles, antimony-doped tin oxide particles (ATO particles), gallium-doped zinc oxide particles (GZO particles), indium-doped zinc oxide particles (IZO particles), aluminum-doped zinc oxide particles (AZO particles), niobium-doped titanium oxide particles, sodium-doped tungsten oxide particles, cesium-doped tungsten oxide particles, thallium-doped tungsten oxide particles, rubidium-doped tungsten oxide particles, tin-doped indium oxide particles (ITO particles), tin-doped zinc oxide particles and silicon-doped zinc oxide particles, and lanthanum hexaboride (LaB₆) particles. Heat shielding particles other than these may be used. Of these, since the heat ray shielding function is high, preferred are metal oxide particles, more preferred are ATO particles, GZO particles, IZO particles, ITO particles or tungsten oxide particles, and especially preferred are ITO particles or tungsten oxide particles. In particular, since the heat ray shielding function is high and the particles are readily available, preferred are tin-doped indium oxide particles (ITO particles), and also preferred are tungsten oxide particles.

The tungsten oxide particles are generally represented by the following formula (X1) or the following formula (X2). In the interlayer film, the tungsten oxide particles represented by the following formula (X1) or the following formula (X2) are suitably used.

W_{y}O_{z} ... Formula (X1)

In the foregoing formula (X1), W represents tungsten, O represents oxygen, and y and z satisfy the equation of 2.0 < z/y < 3.0.

MₓW_{y}O_{z} ... Formula (X2)

In the foregoing formula (X2), M represents at least one kind of element selected from the group consisting of H, He, an alkali metal, an alkaline earth metal, a rare earth element, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta and Re, W represents tungsten, O represents oxygen, and x, y and z satisfy the equations of 0.001 ≤ x/y ≤ 1 and 2.0 < z/y ≤ 3.0.

With regard to the interlayer film and laminated glass, from the viewpoint of further enhancing the heat shielding properties thereof, it is preferred that the tungsten oxide particles be metal-doped tungsten oxide particles. Examples of the "tungsten oxide particles" include metal-doped tungsten oxide particles. Specifically, examples of the metal-doped tungsten oxide particles include sodium-doped tungsten oxide particles, cesium-doped tungsten oxide particles, thallium-doped tungsten oxide particles, and rubidium-doped tungsten oxide particles.

With regard to the interlayer film and laminated glass, from the viewpoint of further enhancing the heat shielding properties thereof, cesium-doped tungsten oxide particles are especially preferred. With regard to the interlayer film and laminated glass, from the viewpoint of still further enhancing the heat shielding properties thereof, it is preferred that the cesium-doped tungsten oxide particles be tungsten oxide particles represented by the formula: Cs_{0.33}WO₃.

The average particle diameter of the heat shielding particles is preferably 0.01 µm or more, more preferably 0.02 µm or more, preferably 0.1 µm or less and more preferably 0.05 µm or less. When the average particle diameter is the above lower limit or more, the heat ray shielding properties are sufficiently heightened. When the average particle diameter is the above upper limit or less, the dispersibility of heat shielding particles is enhanced.

The "average particle diameter" refers to the volume average particle diameter. The average particle diameter can be measured using a particle size distribution measuring apparatus ("UPA-EX150" available from NIKKISO CO., LTD.), or the like.

In 100% by weight of a layer containing the heat shielding particles (a first layer, a second layer or a third layer), the content of the heat shielding particles is preferably 0.01% by weight or more, more preferably 0.1% by weight or more, further preferably 1% by weight or more, especially preferably 1.5% by weight or more, preferably 6% by weight or less, more preferably 5.5% by weight or less, further preferably 4% by weight or less, especially preferably 3.5% by weight or less and most preferably 3.0% by weight or less. When the content of the heat shielding particles is the above lower limit or more and the above upper limit or less, the heat shielding properties are sufficiently enhanced and the visible light transmittance is sufficiently heightened.

It is preferred that a layer containing the heat shielding particles (a first layer, a second layer or a third layer) contain the heat shielding particles in a proportion of 0.1 g/m² or more and 12 g/m² or less. When the proportion of the heat shielding particles falls within the above-mentioned range, the heat shielding properties are sufficiently enhanced and the visible light transmittance is sufficiently heightened. The proportion of the heat shielding particles is preferably 0.5 g/m² or more, more preferably 0.8 g/m² or more, further preferably 1.5 g/m² or more, especially preferably 3 g/m² or more, preferably 11 g/m² or less, more preferably 10 g/m² or less, further preferably 9 g/m² or less and especially preferably 7 g/m² or less. When the proportion is the above lower limit or more, the heat shielding properties are further enhanced. When the proportion is the above upper limit or less, the visible light transmittance is further heightened.

### (Metal salt)

It is preferred that the interlayer film include at least one kind of metal salt (hereinafter, sometimes described as Metal salt M) among an alkali metal salt and an alkaline earth metal salt. It is preferred that the first layer contain the Metal salt M. It is preferred that the second layer contain the Metal salt M. It is preferred that the third layer contain the Metal salt M. By the use of the Metal salt M, controlling the adhesivity between the interlayer film and a laminated glass member or the adhesivity between respective layers in the interlayer film is facilitated. One kind of the Metal salt M may be used alone, and two or more kinds thereof may be used in combination.

It is preferred that the Metal salt M contain at least one kind of metal selected from the group consisting of Li, Na, K, Rb, Cs, Mg, Ca, Sr and Ba. It is preferred that the metal salt included in the interlayer film contain at least one kind of metal among K and Mg.

Moreover, it is more preferred that the Metal salt M be an alkali metal salt of an organic acid with 2 to 16 carbon atoms or an alkaline earth metal salt of an organic acid with 2 to 16 carbon atoms, and it is further preferred that the Metal salt M be a magnesium carboxylate with 2 to 16 carbon atoms or a potassium carboxylate with 2 to 16 carbon atoms.

Although the magnesium carboxylate with 2 to 16 carbon atoms and the potassium carboxylate with 2 to 16 carbon atoms are not particularly limited, examples thereof include magnesium acetate, potassium acetate, magnesium propionate, potassium propionate, magnesium 2-ethylbutyrate, potassium 2-ethylbutanoate, magnesium 2-ethylhexanoate, and potassium 2-ethylhexanoate.

The total of the contents of Mg and K in a layer containing the Metal salt M (a first layer, a second layer or a third layer) is preferably 5 ppm or more, more preferably 10 ppm or more, further preferably 20 ppm or more, preferably 300 ppm or less, more preferably 250 ppm or less and further preferably 200 ppm or less. When the total of the contents of Mg and K is the above lower limit or more and the above upper limit or less, the adhesivity between the interlayer film and a laminated glass member or the adhesivity between respective layers in the interlayer film can be further well controlled.

### (Ultraviolet ray screening agent)

It is preferred that the interlayer film include an ultraviolet ray screening agent. It is preferred that the first layer contain an ultraviolet ray screening agent. It is preferred that the second layer contain an ultraviolet ray screening agent. It is preferred that the third layer contain an ultraviolet ray screening agent. By the use of an ultraviolet ray screening agent, even when the interlayer film and the laminated glass are used for a long period of time, the visible light transmittance becomes further difficult to be lowered. One kind of the ultraviolet ray screening agent may be used alone, and two or more kinds thereof may be used in combination.

Examples of the ultraviolet ray screening agent include an ultraviolet ray absorber. It is preferred that the ultraviolet ray screening agent be an ultraviolet ray absorber.

Examples of the ultraviolet ray screening agent include a metal-based ultraviolet ray screening agent (an ultraviolet ray screening agent containing a metal), a metal oxide-based ultraviolet ray screening agent (an ultraviolet ray screening agent containing a metal oxide), a benzotriazole-based ultraviolet ray screening agent (an ultraviolet ray screening agent having a benzotriazole structure), a benzophenone-based ultraviolet ray screening agent (an ultraviolet ray screening agent having a benzophenone structure), a triazine-based ultraviolet ray screening agent (an ultraviolet ray screening agent having a triazine structure), a malonic acid ester-based ultraviolet ray screening agent (an ultraviolet ray screening agent having a malonic acid ester structure), an oxanilide-based ultraviolet ray screening agent (an ultraviolet ray screening agent having an oxanilide structure), and a benzoate-based ultraviolet ray screening agent (an ultraviolet ray screening agent having a benzoate structure).

Examples of the metal-based ultraviolet ray screening agent include platinum particles, particles in which the surface of platinum particles is coated with silica, palladium particles, and particles in which the surface of palladium particles is coated with silica. It is preferred that the ultraviolet ray screening agent not be heat screening particles.

The ultraviolet ray screening agent is preferably a benzotriazole-based ultraviolet ray screening agent, a benzophenone-based ultraviolet ray screening agent, a triazine-based ultraviolet ray screening agent or a benzoate-based ultraviolet ray screening agent, more preferably a benzotriazole-based ultraviolet ray screening agent or a benzophenone-based ultraviolet ray screening agent, and further preferably a benzotriazole-based ultraviolet ray screening agent.

Examples of the metal oxide-based ultraviolet ray screening agent include zinc oxide, titanium oxide, and cerium oxide. Furthermore, with regard to the metal oxide-based ultraviolet ray screening agent, the surface thereof may be coated with any material. Examples of the coating material for the surface of the metal oxide-based ultraviolet ray screening agent include an insulating metal oxide, a hydrolyzable organosilicon compound, and a silicone compound.

Examples of the insulating metal oxide include silica, alumina, and zirconia. For example, the insulating metal oxide has a band-gap energy of 5.0 eV or more.

Examples of the benzotriazole-based ultraviolet ray screening agent include benzotriazole-based ultraviolet ray screening agents such as 2-(2'-hydroxy-5'-methylphenyl)benzotriazole ("Tinuvin P" available from BASF Japan Ltd.), 2-(2'-hydroxy-3',5'-di-t-butylphenyl)benzotriazole ("Tinuvin 320" available from BASF Japan Ltd.), 2-(2'-hydroxy-3'-t-butyl-5-methylphenyl)-5-chlorobenzotriazole ("Tinuvin 326" available from BASF Japan Ltd.) and 2-(2'-hydroxy-3',5'-di-amylphenyl)benzotriazole ("Tinuvin 328" available from BASF Japan Ltd.). It is preferred that the ultraviolet ray screening agent be a benzotriazole-based ultraviolet ray screening agent containing halogen atoms, and it is more preferred that the ultraviolet ray screening agent be a benzotriazole-based ultraviolet ray screening agent containing chlorine atoms, since those are excellent in ultraviolet ray absorbing performance.

Examples of the benzophenone-based ultraviolet ray screening agent include octabenzone ("Chimassorb 81" available from BASF Japan Ltd.).

Examples of the triazine-based ultraviolet ray screening agent include "LA-F70" available from ADEKA CORPORATION and 2-(4,6-diphenyl-1,3,5-triazine-2-yl)-5-[(hexyl)oxy]-phenol ("Tinuvin 1577FF" available from BASF Japan Ltd.).

Examples of the malonic acid ester-based ultraviolet ray screening agent include dimethyl 2-(p-methoxybenzylidene)malonate, tetraethyl-2,2-(1,4-phenylenedimethylidene)bismalonate, and 2-(p-methoxybenzylidene)-bis(1,2,2,6,6-pentamethyl-4-piperidinyl)malonate.

Examples of a commercial product of the malonic acid ester-based ultraviolet ray screening agent include Hostavin B-CAP, Hostavin PR-25 and Hostavin PR-31 (any of these is available from Clariant Japan K.K.).

Examples of the oxanilide-based ultraviolet ray screening agent include a kind of oxalic acid diamide having a substituted aryl group on the nitrogen atom such as N-(2-ethylphenyl)-N'-(2-ethoxy-5-t-butylphenyl)oxalic acid diamide, N-(2-ethylphenyl)-N'-(2-ethoxy-phenyl)oxalic acid diamide and 2-ethyl-2'-ethoxy-oxanilide ("Sanduvor VSU" available from Clariant Japan K.K.).

Examples of the benzoate-based ultraviolet ray screening agent include 2,4-di-tert-butylphenyl-3,5-di-tert-butyl-4-hydroxybenzoate ("Tinuvin 120" available from BASF Japan Ltd.).

From the viewpoint of further suppressing the lowering in visible light transmittance after the lapse of a certain period of time, in 100% by weight of a layer containing the ultraviolet ray screening agent (a first layer, a second layer or a third layer), the content of the ultraviolet ray screening agent is preferably 0.1% by weight or more, more preferably 0.2% by weight or more, further preferably 0.3% by weight or more, especially preferably 0.5% by weight or more, preferably 2.5% by weight or less, more preferably 2% by weight or less, further preferably 1% by weight or less and especially preferably 0.8% by weight or less. In particular, by setting the content of the ultraviolet ray screening agent to be 0.2% by weight or more in 100% by weight of a layer containing the ultraviolet ray screening agent, with regard to the interlayer film and laminated glass, the lowering in visible light transmittance thereof after the lapse of a certain period of time can be significantly suppressed.

### (Oxidation inhibitor)

It is preferred that the interlayer film include an oxidation inhibitor. It is preferred that the first layer contain an oxidation inhibitor. It is preferred that the second layer contain an oxidation inhibitor. It is preferred that the third layer contain an oxidation inhibitor. One kind of the oxidation inhibitor may be used alone, and two or more kinds thereof may be used in combination.

Examples of the oxidation inhibitor include a phenol-based oxidation inhibitor, a sulfur-based oxidation inhibitor, and a phosphorus-based oxidation inhibitor. The phenol-based oxidation inhibitor is an oxidation inhibitor having a phenol skeleton. The sulfur-based oxidation inhibitor is an oxidation inhibitor containing a sulfur atom. The phosphorus-based oxidation inhibitor is an oxidation inhibitor containing a phosphorus atom.

It is preferred that the oxidation inhibitor be a phenol-based oxidation inhibitor or a phosphorus-based oxidation inhibitor.

Examples of the phenol-based oxidation inhibitor include 2,6-di-t-butyl-p-cresol (BHT), butylated hydroxyanisole (BHA), 2,6-di-t-butyl-4-ethylphenol, stearyl β-(3,5-di-t-butyl-4-hydroxyphenyl)propionate, 2,2'-methylenebis-(4-methyl-6-butylphenol), 2,2'-methylenebis-(4-ethyl-6-t-butylphenol), 4,4'-butylidene-bis-(3-methyl-6-t-butylphenol), 1,1,3-tris-(2-methyl-hydroxy-5-t-butylphenyl)butane, tetrakis[methylene-3-(3',5'-butyl-4-hydroxyphenyl)propionate]methane, 1,3,3-tris-(2-methyl-4-hydroxy-5-t-butylphenol)butane, 1,3,5-trimethyl-2,4,6-tris(3,5-di-t-butyl-4-hydroxybenzyl)benzene, bis(3,3'-t-butylphenol)butyric acid glycol ester, and bis(3-t-butyl-4-hydroxy-5-methylbenzenepropanoic acid)ethylenebis(oxyethylene). One kind or two or more kinds among these oxidation inhibitors are suitably used.

Examples of the phosphorus-based oxidation inhibitor include tridecyl phosphite, tris(tridecyl) phosphite, triphenyl phosphite, trinonylphenyl phosphite, bis(tridecyl)pentaerithritol diphosphite, bis(decyl)pentaerithritol diphosphite, tris(2,4-di-t-butylphenyl) phosphite, bis(2,4-di-t-butyl-6-methylphenyl)ethyl ester phosphorous acid, tris(2,4-di-t-butylphenyl) phosphite, and 2,2'-methylenebis(4,6-di-t-butyl-1-phenyloxy)(2-ethylhexyloxy)phosphorus. One kind or two or more kinds among these oxidation inhibitors are suitably used.

Examples of a commercial product of the oxidation inhibitor include "IRGANOX 245" available from BASF Japan Ltd., "IRGAFOS 168" available from BASF Japan Ltd., "IRGAFOS 38" available from BASF Japan Ltd., "Sumilizer BHT" available from Sumitomo Chemical Co., Ltd., and "IRGANOX 1010" available from BASF Japan Ltd.,.

With regard to the interlayer film and laminated glass, in order to maintain high visible light transmittance thereof over a long period of time, it is preferred that the content of the oxidation inhibitor be 0.1% by weight or more in 100% by weight of the interlayer film or in 100% by weight of the layer containing the oxidation inhibitor (a first layer, a second layer or a third layer). Moreover, since an effect commensurate with the addition of an oxidation inhibitor is not attained, it is preferred that the content of the oxidation inhibitor be 2% by weight or less in 100% by weight of the interlayer film or in 100% by weight of the layer containing the oxidation inhibitor.

### (Other ingredients)

Each of the interlayer film, the first layer, the second layer and the third layer may include additives such as a flame retardant, an antistatic agent, a pigment, a dye, an adhesive force regulating agent, a moisture-resistance improving agent, a fluorescent brightening agent and an infrared ray absorber, as necessary. One kind of these additives may be used alone, and two or more kinds thereof may be used in combination.

### (Other details of interlayer film for laminated glass)

From the viewpoint of further enhancing the rigidity of laminated glass, the glass transition temperature of each of the second layer and the third layer is preferably 31°C or higher, more preferably 33°C or higher and further preferably 35°C or higher. The upper limit of the glass transition temperature of each of the second layer and the third layer is not particularly limited. From the viewpoint of further heightening the sound insulating properties of the interlayer film, the glass transition temperature of each of the second layer and the third layer may be 60°C or lower.

The thickness of the interlayer film is not particularly limited. From the viewpoint of the practical aspect and the viewpoint of sufficiently enhancing the penetration resistance and the rigidity of laminated glass, the thickness of the interlayer film is preferably 0.1 mm or more, more preferably 0.25 mm or more, preferably 3 mm or less and more preferably 1.5 mm or less. When the thickness of the interlayer film is the above lower limit or more, the penetration resistance and the rigidity of laminated glass are enhanced. When the thickness of the interlayer film is the above upper limit or less, the transparency of the interlayer film is further improved.

The thickness of the interlayer film is defined as T. The thickness of the first layer is preferably 0.0625T or more, more preferably 0.1T or more, preferably 0.375T or less and more preferably 0.25T or less.

The thickness of each of the second layer and the third layer is preferably 0.3125T or more, more preferably 0.375T or more, preferably 0.9375T or less and more preferably 0.9T or less. The thickness of each of the second layer and the third layer may be 0.46875T or less and may be 0.45T or less. Moreover, when the thickness of each of the second layer and the third layer is the above lower limit or more and the above upper limit or less, the rigidity of laminated glass is further enhanced and the bleed-out of the plasticizer can be suppressed.

The total thickness of the second layer and the third layer is preferably 0.625T or more, more preferably 0.75T or more, preferably 0.9375T or less and more preferably 0.9T or less. Moreover, when the total thickness of the second layer and the third layer is the above lower limit or more and the above upper limit or less, the rigidity of laminated glass is further enhanced and the bleed-out of the plasticizer can be suppressed.

The production method of the interlayer film according to the present invention is not particularly limited. Examples of the production method of the interlayer film according to the present invention include a method of separately forming respective resin compositions used for constituting respective layers into respective layers, and then, for example, layering the respective obtained layers, and a method of coextruding respective resin compositions used for constituting respective layers with an extruder and layering the respective layers. A production method of extrusion-molding is preferred because the method is suitable for continuous production.

Since the production efficiency of the interlayer film is excellent, it is preferred that respective polyvinyl acetal resins contained in the second layer and the third layer be the same as each other, it is more preferred that respective polyvinyl acetal resins contained in the second layer and the third layer be the same as each other and respective plasticizers contained therein be the same as each other, and it is further preferred that the second layer and the third layer be formed from the same resin composition as each other.

It is preferred that at least one surface among surfaces of both sides of the interlayer film have a recess/protrusion shape. It is more preferred that surfaces of both sides of the interlayer film have a recess/protrusion shape. The method for forming the recess/protrusion shape is not particularly limited, and examples thereof include an embossing roll method, a calender roll method, and a profile extrusion method. Of these, since it is possible to quantitatively form many embosses with a recess/protrusion shape constituting a constant uneven pattern, the embossing roll method is preferred.

### (Laminated glass)

Fig. 2 is a sectional view schematically showing an example of laminated glass prepared with the interlayer film for laminated glass shown in Fig. 1.

The laminated glass 31 shown in Fig. 2 is provided with a first laminated glass member 21, a second laminated glass member 22 and an interlayer film 11. The interlayer film 11 is arranged between the first laminated glass member 21 and the second laminated glass member 22 to be sandwiched therebetween.

The first laminated glass member 21 is layered on a first surface 11a of the interlayer film 11. The second laminated glass member 22 is layered on a second surface 11b opposite to the first surface 11a of the interlayer film 11. The first laminated glass member 21 is layered on an outer surface 2a of a second layer 2. The second laminated glass member 22 is layered on an outer surface 3a of a third layer 3.

As described above, the laminated glass according to the present invention is provided with a first laminated glass member, a second laminated glass member and an interlayer film, and the interlayer film is the interlayer film for laminated glass according to the present invention. In the laminated glass according to the present invention, the above-mentioned interlayer film is arranged between the first laminated glass member and the second laminated glass member.

Examples of the laminated glass member include a glass plate, and a PET (polyethylene terephthalate) film. As the laminated glass, laminated glass in which an interlayer film is sandwiched between a glass plate and a PET film or the like, as well as laminated glass in which an interlayer film is sandwiched between two glass plates, is included. The laminated glass is a laminate provided with a glass plate, and it is preferred that at least one glass plate be used.

Examples of the glass plate include a sheet of inorganic glass and a sheet of organic glass. Examples of the inorganic glass include float plate glass, heat ray-absorbing plate glass, heat ray-reflecting plate glass, polished plate glass, figured glass, net-reinforced plate glass, and wired plate glass. The organic glass is synthetic resin glass substituted for inorganic glass. Examples of the organic glass include a polycarbonate plate, and a poly(meth)acrylic resin plate. Examples of the poly(meth)acrylic resin plate include a polymethyl (meth)acrylate plate.

The thickness of the laminated glass member is preferably 1 mm or more, preferably 5 mm or less and more preferably 3 mm or less. Moreover, when the laminated glass member is a glass plate, the thickness of the glass plate is preferably 0.5 mm or more, more preferably 0.7 mm or more, preferably 5 mm or less and more preferably 3 mm or less. When the laminated glass member is a PET film, the thickness of the PET film is preferably 0.03 mm or more and preferably 0.5 mm or less.

By the use of the interlayer film according to the present invention, even when the thickness of laminated glass is thinned, the rigidity of laminated glass can be maintained high. From the viewpoints of attaining reduced weight of laminated glass and decreasing the amount of the material for laminated glass to reduce the environmental load, and improving fuel consumption of an automobile by reduction in weight of laminated glass to reduce the environmental load, the thickness of each of the glass plate and the laminated glass member is preferably 2 mm or less, more preferably 1.8 mm or less, even more preferably 1.6 mm or less, even more preferably 1.5 mm or less, even more preferably 1.4 mm or less, even more preferably 1.3 mm or less, even more preferably 1.2 mm or less, even more preferably 1.1 mm or less, further preferably 1 mm or less, still further preferably 0.8 mm or less and especially preferably 0.7 mm or less. From the viewpoint of improving fuel consumption of an automobile by reduction in weight of laminated glass to reduce the environmental load, each of the total thickness of two sheets of glass plates in laminated glass and the total thickness of two sheets of laminated glass members is preferably 4 mm or less, more preferably 3.6 mm or less, even more preferably 3.2 mm or less, even more preferably 3 mm or less, even more preferably 2.8 mm or less, even more preferably 2.6 mm or less, even more preferably 2.4 mm or less, even more preferably 2.2 mm or less, further preferably 2 mm or less, still further preferably 1.6 mm or less and especially preferably 1.4 mm or less.

The method for producing the laminated glass is not particularly limited. For example, an interlayer film is sandwiched between the first laminated glass member and the second laminated glass member, and the air remaining between each of the first laminated glass member and the second laminated glass member and the interlayer film is removed by making the members to pass through a pressing roll or by putting the members into a rubber bag and sucking the contents under reduced pressure. Afterward, the members are preliminarily bonded together at about 70 to 110°C to obtain a laminate. Next, by putting the laminate into an autoclave or by pressing the laminate, the members are press-bonded together at about 120 to 150°C and under a pressure of 1 to 1.5 MPa. In this way, laminated glass can be obtained. At the time of producing the laminated glass, a first layer, a second layer and a third layer may be layered.

Each of the interlayer film and the laminated glass can be used for automobiles, railway vehicles, aircraft, ships, buildings and the like. Each of the interlayer film and the laminated glass can also be used for applications other than these applications. It is preferred that the interlayer film and the laminated glass be an interlayer film and laminated glass for vehicles or for building respectively, and it is more preferred that the interlayer film and the laminated glass be an interlayer film and laminated glass for vehicles respectively. Each of the interlayer film and the laminated glass can be used for a windshield, side glass, rear glass or roof glass of an automobile, and the like. The interlayer film and the laminated glass are suitably used for automobiles. The interlayer film is used for obtaining laminated glass of an automobile.

Hereinafter, the present invention will be described in more detail with reference to examples. The present invention is not limited only to these examples.

The following materials were prepared.

### (Polyvinyl acetal resin)

Polyvinyl acetal resin (A): n-butyraldehyde was used, the average polymerization degree of polyvinyl alcohol (PVA) of 1700, the content of the hydroxyl group of 30.6% by mole, the acetylation degree of 0.9% by mole, the acetalization degree (the butyralization degree) of 68.5% by mole
Polyvinyl acetal resin (B): n-butyraldehyde was used, the average polymerization degree of polyvinyl alcohol (PVA) of 800, the content of the hydroxyl group of 34% by mole, the acetylation degree of 0.9% by mole, the acetalization degree (the butyralization degree) of 65.1% by mole
Polyvinyl acetal resin (C): n-butyraldehyde was used, the average polymerization degree of polyvinyl alcohol (PVA) of 1700, the content of the hydroxyl group of 34% by mole, the acetylation degree of 5% by mole, the acetalization degree (the butyralization degree) of 61% by mole
Polyvinyl acetal resin (D): n-butyraldehyde was used, the average polymerization degree of polyvinyl alcohol (PVA) of 1700, the content of the hydroxyl group of 24% by mole, the acetylation degree of 10% by mole, the acetalization degree (the butyralization degree) of 66% by mole

With regard to the polyvinyl acetal resin, the acetalization degree (the butyralization degree), the acetylation degree and the content of the hydroxyl group were measured by a method in accordance with JIS K6728 "Testing methods for polyvinyl butyral". In this connection, even in the cases of being measured according to ASTM D1396-92, numerical values similar to those obtained by a method in accordance with JIS K6728 "Testing methods for polyvinyl butyral" were exhibited.

### (Second resin component)

Acrylic polymer (A): an acrylic polymer prepared by polymerizing a polymerization component containing 20% by weight of ethyl acrylate, 30% by weight of butyl acrylate, 20% by weight of benzyl acrylate and 30% by weight of 2-hydroxyethyl acrylate
Acrylic polymer (B): an acrylic polymer prepared by polymerizing a polymerization component containing 28% by weight of ethyl acrylate, 22% by weight of butyl acrylate, 30% by weight of benzyl acrylate and 20% by weight of 2-hydroxyethyl acrylate
Acrylic polymer (C): an acrylic polymer prepared by polymerizing a polymerization component containing 75% by weight of ethyl acrylate and 25% by weight of benzyl acrylate
Acrylic polymer (D): an acrylic polymer prepared by polymerizing a polymerization component containing 25% by weight of ethyl acrylate, 22% by weight of butyl acrylate, 23% by weight of benzyl acrylate and 30% by weight of 2-hydroxyethyl acrylate
Acrylic polymer (E): an acrylic polymer prepared by polymerizing a polymerization component containing 30% by weight of ethyl acrylate, 29% by weight of butyl acrylate, 21% by weight of benzyl acrylate and 20% by weight of 2-hydroxyethyl acrylate
Acrylic polymer (F): an acrylic polymer prepared by polymerizing a polymerization component containing 18% by weight of ethyl acrylate, 32% by weight of butyl acrylate, 20% by weight of benzyl acrylate and 30% by weight of 2-hydroxyethyl acrylate
Acrylic polymer (G): an acrylic polymer prepared by polymerizing a polymerization component containing 15% by weight of ethyl acrylate, 35% by weight of butyl acrylate, 20% by weight of benzyl acrylate and 30% by weight of 2-hydroxyethyl acrylate
Acrylic polymer (H): an acrylic polymer prepared by polymerizing a polymerization component containing 60% by weight of 2-ethylhexyl acrylate, 20% by weight of benzyl acrylate and 20% by weight of 2-hydroxyethyl acrylate
Acrylic polymer (I): an acrylic polymer prepared by polymerizing a polymerization component containing 20% by weight of ethyl acrylate, 30% by weight of butyl acrylate, 25% by weight of benzyl acrylate and 25% by weight of 2-hydroxyethyl acrylate
Acrylic polymer (J): an acrylic polymer prepared by polymerizing a polymerization component containing 75% by weight of 2-ethylhexyl acrylate and 25% by weight of benzyl acrylate
Acrylic polymer (K): an acrylic polymer prepared by polymerizing a polymerization component containing 60% by weight of ethyl acrylate, 30% by weight of butyl acrylate and 10% by weight of 2-hydroxyethyl acrylate
Vinyl acetate polymer (L): a vinyl acetate polymer prepared by polymerizing a polymerization component composed of 100% by weight of vinyl acetate

### (Plasticizer)

### Triethylene glycol di-2-ethylhexanoate (3GO)

### (Ultraviolet ray screening agent)

Tinuvin 326 (2-(2'-hydroxy-3'-t-butyl-5-methylphenyl)-5-chlorobenzotriazole, "Tinuvin 326" available from BASF Japan Ltd.)

### (Oxidation inhibitor)

### BHT (2,6-di-t-butyl-p-cresol)

### (Example 1)

### Preparation of composition for forming first layer:

One hundred parts by weight of a polyvinyl acetal resin (A), 300 parts by weight of an acrylic polymer (A), 0.2 parts by weight of an ultraviolet ray screening agent (Tinuvin 326) and 0.2 parts by weight of an oxidation inhibitor (BHT) were mixed to obtain a composition for forming a first layer.

### Preparation of composition for forming second layer and third layer:

One hundred parts by weight of a polyvinyl acetal resin (A), 20 parts by weight of a plasticizer (3GO), 0.2 parts by weight of an ultraviolet ray screening agent (Tinuvin 326) and 0.2 parts by weight of an oxidation inhibitor (BHT) were mixed to obtain a composition for forming a second layer and a third layer.

### Preparation of interlayer film:

By coextruding the composition for forming a first layer and the composition for forming a second layer and a third layer using a coextruder, an interlayer film (760 µm in thickness) having a layered structure with a stack of a second layer (330 µm in thickness)/a first layer (100 µm in thickness)/a third layer (330 µm in thickness) was prepared.

### Preparation of laminated glass:

Two washed and dried glass plates (a first laminated glass member and a second laminated glass member, clear float glass, 25 cm in longitudinal length × 10 cm in transversal length × 2.5 mm in thickness) were prepared. The obtained interlayer film was sandwiched between the two glass plates to obtain a laminate. The obtained laminate was put into a rubber bag and the inside thereof was degassed for 20 minutes at a degree of vacuum of 2660 Pa (20 torr). Afterward, while keeping the laminate degassed, furthermore, the laminate was held in place for 30 minutes at 90°C and pressed under vacuum in an autoclave. The laminate thus preliminarily press-bonded was subjected to press-bonding for 20 minutes under conditions of 135°C and a pressure of 1.2 MPa (12 kg/cm²) in an autoclave to obtain a sheet of laminated glass.

### (Examples 2 to 20 and Comparative Examples 1 to 4)

An interlayer film and a sheet of laminated glass were obtained in the same manner as that in Example 1 except that the kind of ingredients to be blended and the blending amount thereof for the composition for forming a first layer, the kind of ingredients to be blended and the blending amount thereof for the composition for forming a second layer and a third layer, the thickness of the first layer, the thickness of the second layer, the thickness of the third layer, and the thicknesses of a first laminated glass member and a second laminated glass member were set to those listed in the following Tables 1 to 4. In this connection, in all of the examples and comparative examples, each of the ultraviolet ray screening agents and the oxidation inhibitor of the same kind as that in Example 1 were blended in the same blending amount (0.2 parts by weight) as that in Example 1. In this connection, when an interlayer film failed to be produced by coextrusion, respective compositions were formed into a first layer, a second layer and a third layer by a solution casting method or a thermal press method, and then, layered to easily obtain an interlayer film.

### (Evaluation)

### (1) Glass transition temperature/Peak temperature of loss tangent

Kneaded products having respective compositions of the first layer in examples and comparative examples were prepared. The kneaded product obtained was press-molded with a press molding machine to obtain a resin film A with a thickness of 0.35 mm. The resin film A obtained was allowed to stand for 2 hours under the condition of 25°C and a relative humidity of 30%. After allowed to stand for 2 hours, the viscoelasticity thereof was measured by means of the "ARES-G2" available from TA Instruments Japan Inc. As a jig, a parallel plate with a diameter of 8 mm was used. The measurement was performed under the condition in which the temperature is decreased from 100°C to -50°C at a temperature decreasing rate of 3°C/minute and under the condition of a frequency of 1 Hz and a strain of 1%. In the measurement results obtained, the peak temperature of the loss tangent was defined as the glass transition temperature Tg (°C). In this connection, a peak at the high temperature side was determined to be a peak derived from the polyvinyl acetal resin, and a peak at the low temperature side was determined to be a peak derived from the second resin component.

### (2) Flexural rigidity

A sheet of laminated glass obtained was prepared. The flexural rigidity was evaluated by the testing method schematically shown in Fig. 3. As a measuring apparatus, the universal testing machine 5966, which is available from INSTRON Japan Co., Ltd. and equipped with the static 3-point flexural test jig 2810, was used. Under measurement conditions of the measurement temperature of 20±3°C, the distance D1 of 18 cm and the distance D2 of 25 cm, a sheet of laminated glass was deformed in the F direction at a displacement rate of 1 mm/minute, and the stress at the time when the deformation amount becomes 1.5 mm was measured to calculate the flexural rigidity. The flexural rigidity was judged according to the following criteria.

[Criteria for judgment in flexural rigidity]
○: The stress is 5 MPa or more.
Δ: The stress is 2 MPa or more and less than 5 MPa.
×: The stress is less than 2 MPa.

### (3) Tensile properties (rigidity) at 25°C or 40°C of first layer

A composition for forming a first layer with a thickness of 400 µm or so was prepared, and using the Autograph ("AG-IS" available from SHIMADZU CORPORATION), a tensile test was performed at a tensile speed of 200 mm/min to evaluate the Young's moduli at 25°C and 40°C. The tensile properties were judged according to the following criteria.

### [Criteria for judgment in tensile properties (rigidity)]

○○: The Young's modulus is 2 MPa or more.
○: The Young's modulus is 1 MPa or more and less than 2 MPa.
Δ: The Young's modulus is 0.5 MPa or more and less than 1 MPa.
×: The Young's modulus is less than 0.5 MPa.

### (4) Sound insulating properties

A sheet of laminated glass was excited by means of a vibration generator for a damping test ("Vibration exciter G21-005D" available from SHINKEN CO., LTD.) to obtain vibration characteristics, the vibration characteristics were amplified by a mechanical impedance measuring apparatus ("XG-81" available from RION Co., Ltd.), and the vibration spectrum was analyzed by an FFT spectrum analyzer ("FFT analyzer HP3582A" available from Yokogawa-Hewlett-Packard Company). The peak frequency of the loss factor was determined, and furthermore, the loss factor at 3000 Hz of laminated glass at 20°C was calculated. From the loss factor, the sound insulating properties were judged according to the following criteria. In this connection, the sheet of laminated glass is excellent in sound insulating properties when the loss factor is 0.1 or more, and the sheet of laminated glass is further excellent in sound insulating properties when the loss factor is 0.2 or more.

### [Criteria for judgment in sound insulating properties]

○: The loss factor is 0.2 or more.
Δ: The loss factor is 0.1 or more and less than 0.2.
×: The loss factor is less than 0.1.

### (5) Refractive index

Each of the polyvinyl acetal resin and the second resin component for the composition for forming a first layer was measured by means of a refractometer ("ER-7MW" available from ERMA INC.) to determine the refractive index of each of the polyvinyl acetal resin and the second resin component.

### (6) Measurement of haze after rekneaded

The interlayer film obtained was rekneaded for 10 minutes at 130°C to obtain a composition after rekneaded. The composition after rekneaded was press-molded so that the resulting film has the same thickness as that of the interlayer film before rekneaded to obtain an interlayer film after rekneaded. The interlayer film after rekneaded was sandwiched between two sheets of clear glass with a thickness of 2 mm to obtain a sheet of laminated glass. The sheet of laminated glass obtained was measured for the haze in accordance with JIS K6714 using a haze meter ("TC-H III DPK" available from Tokyo Denshoku Co., Ltd.). The haze after rekneaded was judged according to the following criteria.

### [Criteria for judgment in haze after rekneaded]

○: The haze after rekneaded is less than 0.5%.
Δ: The haze after rekneaded is 0.5% or more and less than 0.8%.
×: The haze after rekneaded is 0.8% or more.

The details and the results are shown in the following Tables 1 to 4. In this connection, in all of the examples, the polyvinyl acetal resin and the second resin component were not compatible with each other in the first layer. In Example 1, the polyvinyl acetal resin and the second resin component formed a co-continuous structure in the first layer, and in Examples 2 to 20, the polyvinyl acetal resin and the second resin component formed a sea-island structure in the first layer. In the following Table 1, the description of ingredients to be blended other than the polyvinyl acetal resin, the second resin component and the plasticizer was omitted.

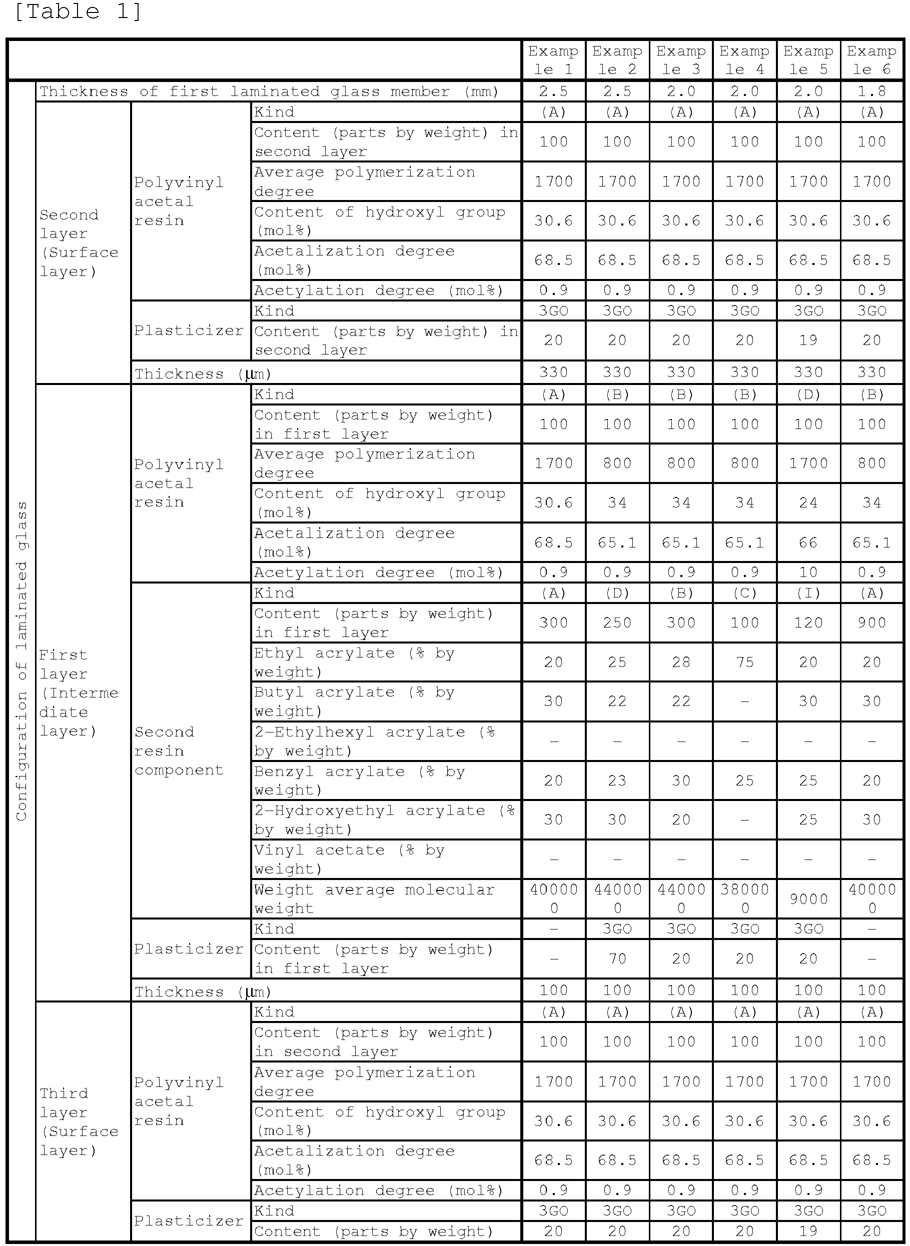

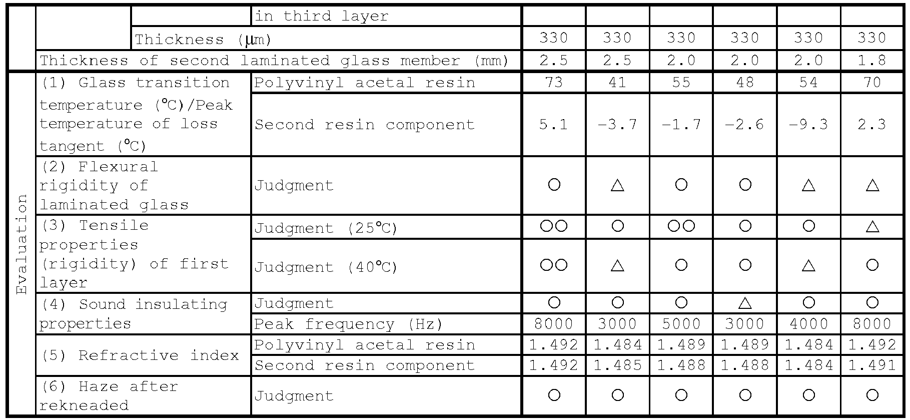

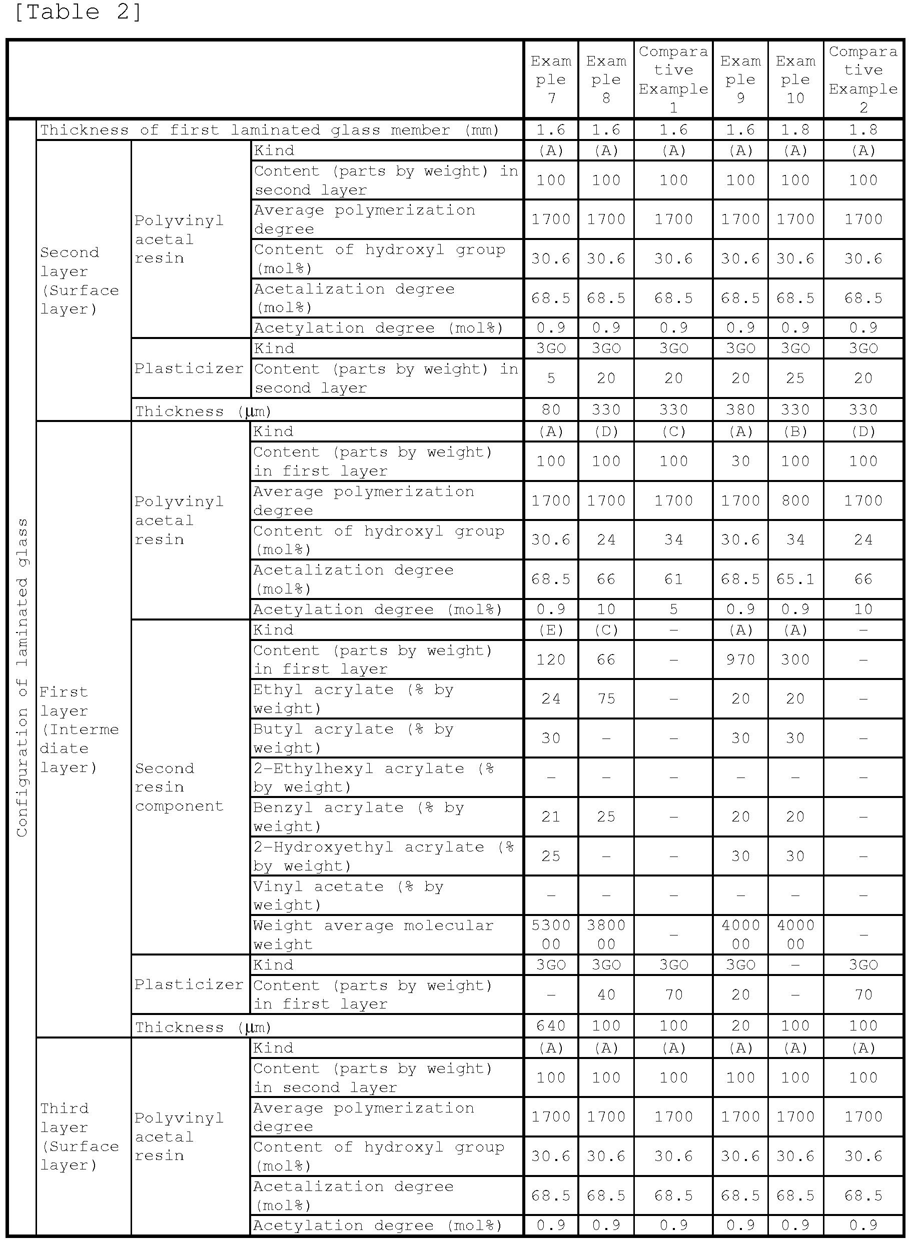

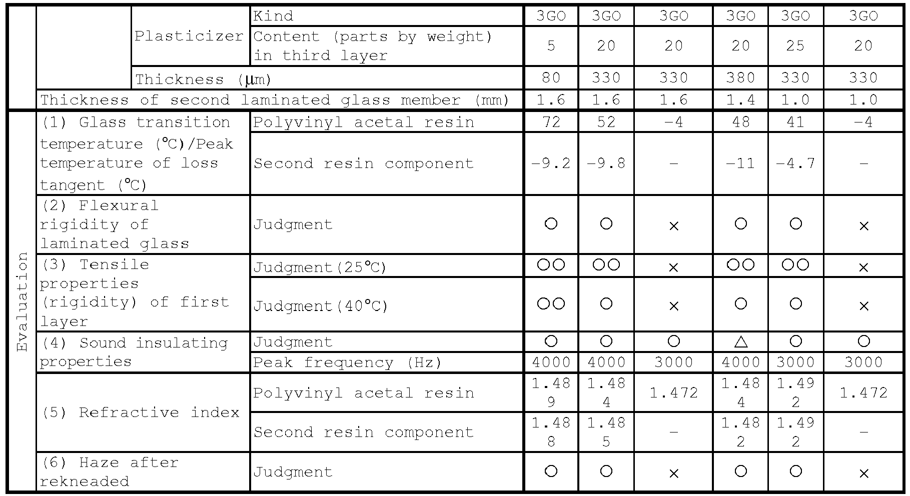

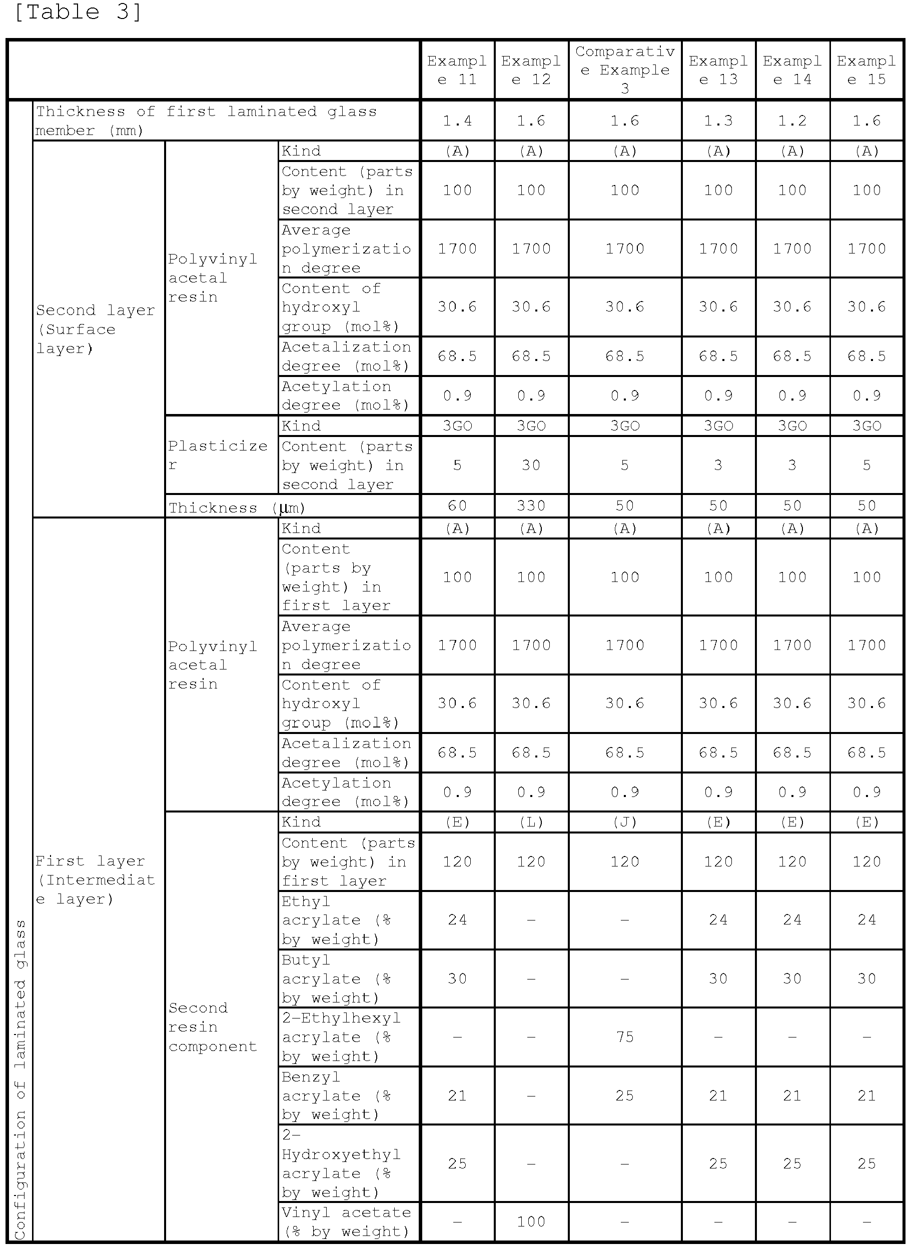

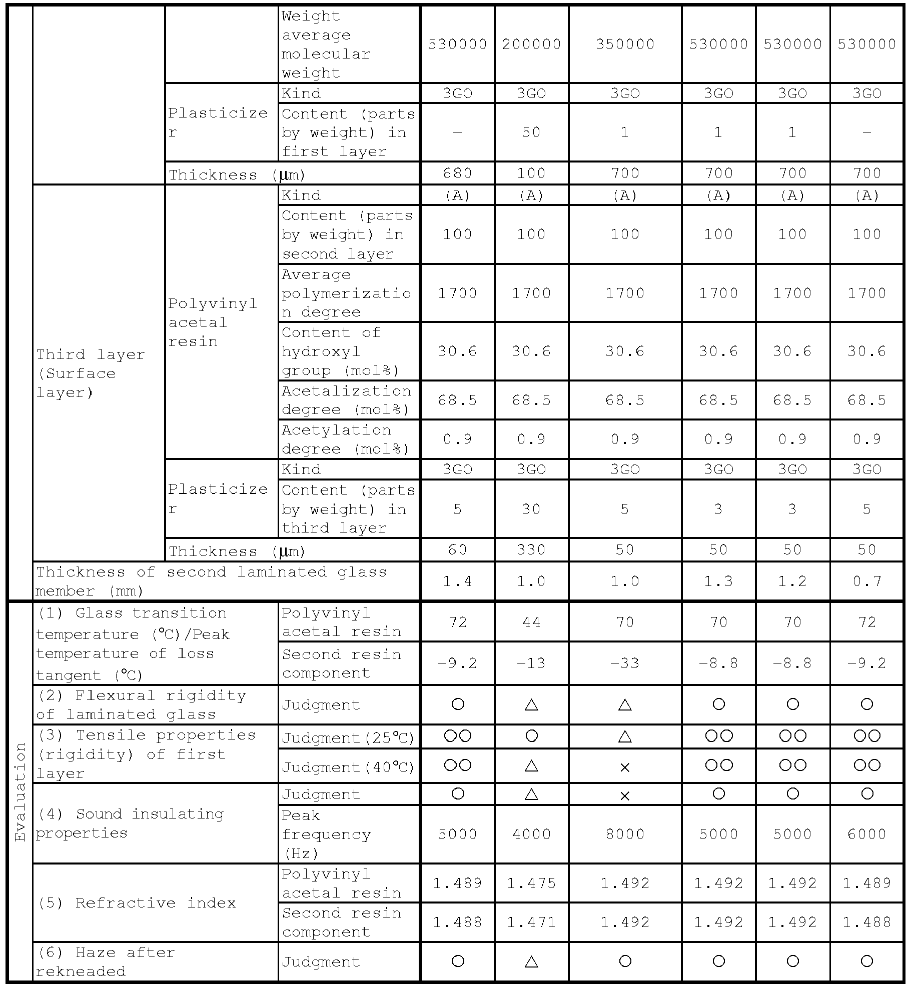

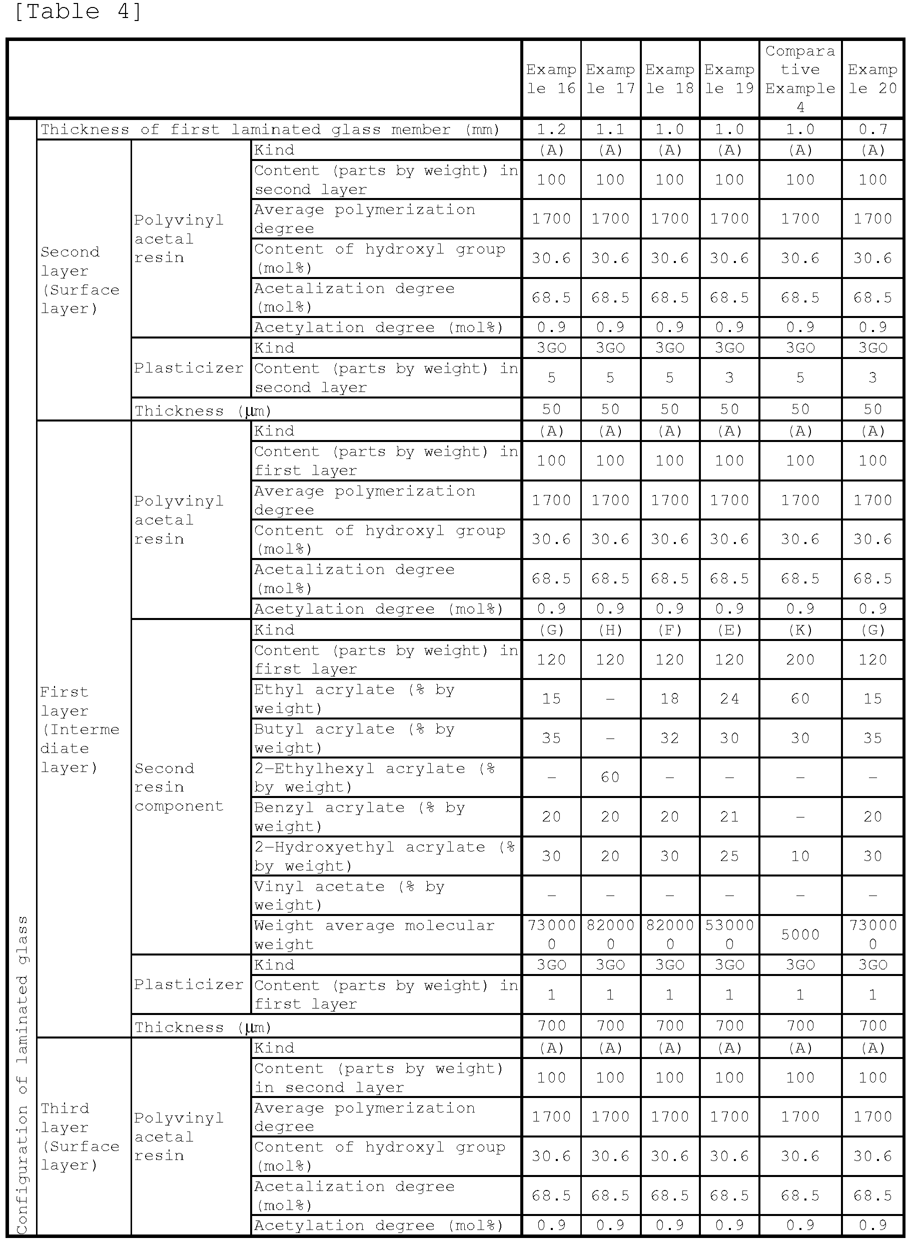

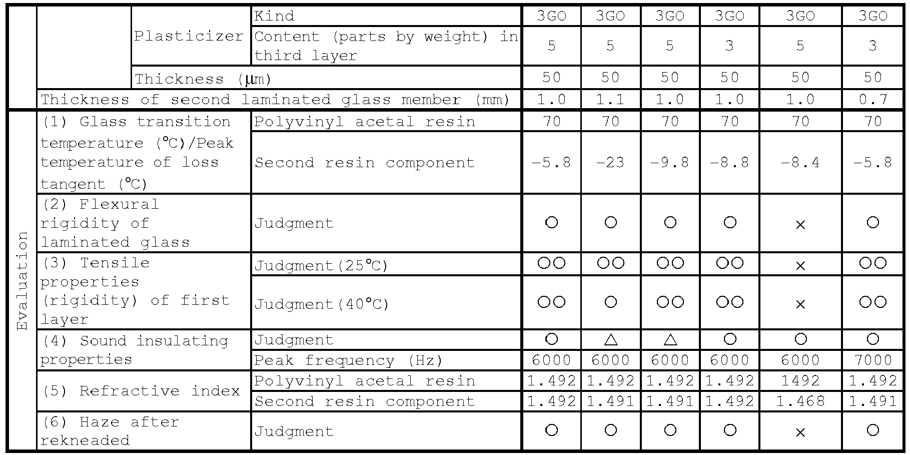

### EXPLANATION OF SYMBOLS

- 1:: First layer
- 1a:: First surface
- 1b:: Second surface
- 2:: Second layer
- 2a:: Outer surface
- 3:: Third layer
- 3a:: Outer surface
- 11:: Interlayer film
- 11a: First surface
- 11b:: Second surface
- 21:: First laminated glass member
- 22:: Second laminated glass member
- 31:: Laminated glass

## Claims

1. An interlayer film for laminated glass, comprising a first layer and a second layer arranged on a first surface side of the first layer,
the first layer containing a polyvinyl acetal resin and a second resin component,
the second layer containing a polyvinyl acetal resin,
the peak temperature of the loss tangent exhibited by the second resin component in the first layer being -30°C or higher and 10°C or lower, and
the refractive index of the second resin component in the first layer being 1.47 or higher and 1.51 or lower.

2. The interlayer film for laminated glass according to claim 1, wherein, in 100% by weight of the total of the polyvinyl acetal resin in the first layer and the second resin component in the first layer, the content of the polyvinyl acetal resin in the first layer is 5% by weight or more and 60% by weight or less and the content of the second resin component in the first layer is 40% by weight or more and 95% by weight or less.

3. The interlayer film for laminated glass according to claim 1 or 2, wherein the weight average molecular weight of the second resin component in the first layer is 10000 or more and 500000 or less.

4. The interlayer film for laminated glass according to any one of claims 1 to 3, wherein the absolute value of the difference in refractive index between the polyvinyl acetal resin in the first layer and the second resin component in the first layer is 0.003 or less.

5. The interlayer film for laminated glass according to any one of claims 1 to 4, wherein the second resin component in the first layer is a resin different from the polyvinyl acetal resin.

6. The interlayer film for laminated glass according to claim 5, wherein the second resin component in the first layer is an acrylic polymer, an urethane polymer, a silicone polymer, a kind of rubber or a vinyl acetate polymer.

7. The interlayer film for laminated glass according to claim 6, wherein the second resin component in the first layer is an acrylic polymer.

8. The interlayer film for laminated glass according to any one of claims 1 to 7, further comprising a third layer arranged on a second surface side opposite to the first surface of the first layer,
the third layer containing a polyvinyl acetal resin.

9. The interlayer film for laminated glass according to claim 8, wherein the second layer contains a plasticizer and the third layer contains a plasticizer.

10. Laminated glass, comprising:
a first laminated glass member;
a second laminated glass member; and
the interlayer film for laminated glass according to any one of claims 1 to 9,
the interlayer film for laminated glass being arranged between the first laminated glass member and the second laminated glass member.
